# EUROPÄISCHE PATENTANMELDUNG

(11) **EP 2 565 214 A1**
(43) Veröffentlichungstag der Anmeldung: **06.03.2013**
(21) Anmeldenummer: 11179809.6
(22) Anmeldetag: 02.09.2011
(51) Int. Cl.: C08G 18/63, C08L 75/04, C08L 71/02

(54) **Dispersion aus einer flüssigen und einer festen Phase**

(71) Anmelder: BASF SE, 67056 Ludwigshafen (DE)
(72) Erfinder: Die Erfindernennung liegt noch nicht vor

(57) **Zusammenfassung**

Die vorliegende Erfindung betrifft Dispersionen aus einer flüssigen Phase und einer festen Phase.

## Beschreibung

Die vorliegende Erfindung betrifft Dispersionen aus einer flüssigen Phase und einer festen Phase.

Polymergefüllte Polyole, auch als "Graft-Polyole" oder "Polymerpolyole" bezeichnet, werden in der Polyurethan (PU)-Industrie als Rohstoff eingesetzt, um die Härte und Druckfestigkeit von Schaumstoffen zu erhöhen. Auch wird durch Einsatz solcher gefüllter Polyole der Zellöffnungsprozess bei der Herstellung offenzelliger Schäume unterstützt. Obwohl solche gefüllten Polyole überwiegend im Weichschaumbereich eingesetzt werden, gibt es auch Anwendungsmöglichkeiten im Bereich mikrozelluläre Schäume, z.B. Schuhsohlen.

Es handelt sich bei polymergefüllten Polyolen in der Regel um Polyetherole, die gefüllt sind, zum Beispiel mit einem Copolymer aus Styrol und Acrylnitril, aber es gibt auch polymergefüllte Polyesterpolyole. Beim Herstellprozess dieser Produkte wird in der Regel Styrol und Acrylnitril im Polyetherol in Gegenwart eines Makromonomers polymerisiert (Styrol-Acrylnitril-Polymer, SAN). Der Gehalt an organischem Füllstoff im Polyol beträgt in der Regel 30-50 Gewichts%.

Eine Zusammenfassung des Standes der Technik im Bereich Graftpolyole kann beispielsweise M. Ionescu, Chemistry and technology of polyols for polyurethanes, Rapra Technology, 2005, Kap. 6 entnommen werden.

Im Rahmen der vorliegenden Offenbarung bezieht sich der Begriff "Polyol" auf eine Verbindung mit wenigstens zwei Zerewitininoff-aktiven Wasserstoffatomen, z. B. mit mindestens zwei reaktiven Hydroxylgruppen.

In der Graftpolyol-Technologie gibt es zwei Haupttypen Polyetherpolyole als Carrierpolyole, die bei der Herstellung von Polymerpolyolen eingesetzt werden: Reaktivpolyole und Slabpolyole. Diese Polyole unterscheiden sich in Molekulargewicht und Kettenaufbau. Reaktivpolyole haben ein Molekulargewicht von 1000-8000 g/mol, bevorzugt von 2000 bis 6000 g/ mol, enthalten einen Innenblock basierend auf Propylenoxid-Monomeren und einen Endblock basierend auf Ethylenoxid, wobei der Ethylenoxidanteil im Polyol zwischen 13 und 20% liegt. Slabpolyole sind Poly(ethylen/propylen-oxid)-Copolymere mit einem Ethylenoxidgehalt von 5-15% und weisen ein Molekulargewicht von 2500-3500 g/mol auf. Slabpolyole haben in der Regel >90% sekundäre End-Hydroxygruppen.

Der Begriff "Makromer" bezeichnet im Rahmen der vorliegenden Erfindung eine Verbindung, die mindestens eine Hydroxygruppe und mindestens eine ungesättigte Bindung aufweist, insbesondere ein Polyetherol, das mindestens eine ethylenisch ungesättigte Bindung und mindestens eine Hydroxylgruppe aufweist.

Das Makromer erfüllt die Funktion der sterischen Stabilisierung der sich bildenden SAN-Partikel und verhindert somit eine Agglomeration oder Ausflockung der SAN-Partikel. Ferner können durch die verwendete Menge an Makromer die Partikelgrößen gezielt eingestellt werden. In der Regel liegt die Partikelgröße zwischen 0,1 und 5 µm.

Als Makromere werden üblicherweise mehrfunktionelle Polyetherole verwendet, die nachträglich mit einer ungesättigten Bindung versehen wurden, die radikalisch mit den Monomeren polymerisiert werden kann. Ein bekanntes Verfahren hierzu, das auch beispielsweise in EP 0776 922 B1 oder WO 99031160 A1 beschrieben wurde, ist die Funktionalisierung der hydroxygruppenhaltigen Polyetherole mit Dimethyl-meta-isopropenylbenzylisocyanat (TMI). Die Umsetzung eines Polyetherols mit dem TMI erfolgt hierbei bekanntermaßen mit Katalysatoren, die die Reaktion des Isocyanates mit der OH-Gruppe des Polyetherols beschleunigen. Das bekannteste Beispiel ist hier das Dibutylzinndilaurat (DBTL), das sich als sehr effizient bei dieser Reaktion herausgestellt hat und somit auch großtechnisch verwendet wird.

Die Phasenstabilität und die Viskosität von Graftpolyolen hängen stark von dem Makromer ab, das zur Oberflächenstabilisierung der Polymerpartikel verwendet wird. Die Copolymerisation des Makromers mit den Monomeren (wie z. B. Styrol, Acrylnitril) spielt eine wichtige Rolle bei der Bildung polymerer Stabilisatorstrukturen. Die Makromerstruktur muss an das Trägerpolyol angepasst werden, um bei gegebenem Feststoffgehalt eine optimale Stabilisierung und die niedrigstmögliche Viskosität zu erreichen.

Ein allgemeines Problem besteht darin, dass ein Makromer, welches in einem gewissen Polyol eine wirksame Stabilisierung bietet, meist nicht dafür verwendet werden kann, stabile Dispersionen in anderen Trägerpolyolen herzustellen, jedenfalls wenn diese Trägerpolyole sich deutlich in der Polarität, dem PO (Propylenoxid)/ EO (Ethylenoxid)-Verhältnis, der OH-Zahl, der Kettenlänge und/ oder der Funktionalität des Polyolstarters unterscheiden.

Beispielsweise kann ein auf Sorbitol-POₓ-Polyol (OH-Zahl 20 mg KOH/ g) basierendes Makromer verwendet werden, um in einem typischen Slabpolyol stabile SAN-Dispersionen herzustellen, aber das gleiche Makromer liefert in kurzkettigen Polyolen mit einer hohen OH-Zahl (z. B. Hartschaum-Polyole und Kettenverlängerer wie z.B. Ethylenglykol, 1,4 Butandiol und 1,6 Hexandiol, kurzkettige Diole, etc.) keine stabilen Dispersionen.

Schmid et al., Langmuir 2005, 21, 8103-8105 beschreibt die Synthese von Silica-stabilisierten Polystyrol-Latex-Partikeln. Dabei wird ein Styrol-Monomer in einem alkoholischen Silica-Sol (Methanol oder 2-Propanol) polymerisiert; es wird ein durch Silica stabilisierte Polystryrol-Latex-Partikel mit einem Durchmesser von ca. 1 bis 3 µm erhalten.

DE102009001595 beschreibt die Verbesserung der Stabilisierung von nicht miteinander mischbaren Polyolen durch Zugabe von Partikeln und Trägermedien als Kompatibilisierungsmittel.

WO 2010/103072 A1 offenbart ein Verfahren zur Herstellung von Silica-haltigen Dispersionen enthaltend ein Polyetherol oder ein Polyetheramin, durch Versetzen eines wässrigen Kieselsols mit einem Polyetherol und/ oder Polyetheramin, Abdestillieren des Wassers und Versetzen der Dispersion mit einer Verbindung, die zum Beispiel eine alkoxylierte Silylgruppe aufweisen kann.

Weiterhin beschreibt WO 2010/043530 ein Verfahren zur Herstellung von silikathaltigen Polyolen, durch Versetzen eines wässrigen Kieselsols mit einem organischen Lösungsmittel, Versetzen des so erhaltenen Gemischs mit einem Polyol, zumindest teilweises Abdestillieren des organischen Lösungsmittels und Wasser, Versetzen mit einer weiteren Verbindung, und wahlweises Einstellen des pH-Wertes.

Aus dem Stand der Technik ist allerdings bisher kein universell anwendbares und wirtschaftliches Verfahren zur Herstellung stabiler Polymer-Dispersionen in einer großen Bandbreite von Polyolen bekannt. Insbesondere kann eine sterische Stabilisierung von Polymerpartikeln in Kettenverlängerern (wie Ethylenglykol, 1,4-Butandiol, 1,6-Hexandiol, kurzkettige Diole, usw.) nicht mit der Verwendung von Makromeren erreicht werden.

Wie bereits erwähnt, müssen in jedem Einzelfall spezifische Makromere für ein gewisses Polyol verwendet werden; somit kann ein gewisses Makromer nur für gewisse Polyole eingesetzt werden. Bei manchen Polyolen war es bisher sogar unmöglich, überhaupt ein passendes Makromer zur Stabilisierung der Graft-Partikel zu finden, beispielsweise in kurzkettigen Polyolen mit einer hohen OH Zahl, z. B. bei Hartschaum-Polyolen und Kettenverlängerern.

Es war somit eine Aufgabe der vorliegenden Erfindung, die oben genannten Probleme zu überwinden und ein derartiges universell anwendbares Verfahren zur Herstellung stabiler Dispersionen in einer großen Bandbreite von Polyolen bereitzustellen. Eine weitere Aufgabe war es, eine stabile Dispersion aus einer kontinuierlichen Phase und einer festen Phase bereitzustellen.

Überraschenderweise konnten die erwähnten Probleme nun durch die Verwendung anorganischer Partikel gelöst werden.

Diese Partikel bieten unabhängig von der Wahl des Trägerpolyols eine wirksame sterische Stabilisierung der Polymerpartikel. Diese Partikel können unterschiedliche Form haben: kugel-, stab- und plättchen-förmig. Ein wesentliches Merkmal dieser Partikel ist, dass ihre Größe im Bereich der dispergierten Polymerpartikel oder kleiner liegt, das heißt in der Regel kleiner als 5 Mikrometer. Ein weiteres Merkmal der anorganischen Partikel ist, dass zumindest eine der Dimensionen im Nanogrößenbereich liegt, das heißt, dass zumindest eine, bevorzugt alle, der Dimensionen eine Größe von 1 bis 100 nm aufweist/ -en. Die anorganischen Partikel können als Primärpartikel vorliegen oder auch in Form einer agglomerierten Struktur. Diese Partikel werden vor und/ oder während der Herstellung der Polymerpartikel im Polyol oder einem Gemisch bestehend aus Polyol und Monomer dispergiert, so dass sie ihre stabilisierende Wirkung während der Polymerisation der Monomere und der Ausbildung der Polymerpartikel entfalten können. Es ist auch möglich, die Partikel in Form einer Lösung, z. B. einer wässrigen Lösung, zuzugeben, wobei in diesem Fall am Ende das Lösungsmittel, z. B. Wasser, entfernt wird.

Obwohl wir nicht an eine Theorie gebunden sein wollen, wird angenommen, dass die anorganischen Partikel zu der Grenzfläche, gebildet durch die Fällung des Polymers aus der kontinuierlichen Phase, diffundieren und dort ihre phasenstabilisierende Wirkung entfalten. Die anorganischen Partikel können sich an den Oberflächen der Polymerpartikel befinden, aber sie können sich auch im inneren Korpus des Partikels befinden. Die verwendeten anorganischen Partikel zeigen eine grenzflächenstabilisierende Wirkung während des Verfahrens zur Herstellung des polymergefüllten Polyols, und auch eine Verbesserung der Lagerstabilität des hergestellten Polymer-Polyols.

Es wird angenommen, dass sich während der Bildung der Dispersion ein Teil der anorganischen Partikel in der Grenzschicht zwischen dem organischen Polymer und der Verbindung mit wenigstens zwei Zerewitinoff-aktiven Wasserstoffatomen anordnet, was eine wirksame Stabilisierung der neu gebildeten Polymerpartikel gegen Zusammenwachsen (Koaleszenz) bietet. Auf diese Art werden organisch-anorganische Hybridpartikel gebildet, die in einer breiten Auswahl von Polyolen langfristig stabil bleiben. Das erfindungsgemäße Verfahren bietet daher ein universelles und wirtschaftliches Verfahren zur Herstellung stabiler Dispersionen in einer breiten Palette von Polyolen.

Ein Gegenstand der vorliegenden Erfindung ist daher eine Dispersion, umfassend eine kontinuierliche Phase (C) und eine bei 20 °C feste Phase, die in der kontinuierlichen Phase dispergiert ist, wobei die kontinuierliche Phase (C) wenigstens eine Verbindung mit wenigstens zwei Zerewitinoff-aktiven Wasserstoffatomen enthält, und die feste Phase wenigstens einen Füllstoff enthält, wobei der Füllstoff ein Hybridmaterial ist, das jeweils mindestens ein organisches Polymer (P) und mindestens ein anorganisches Partikel umfasst.

Eine Ausführungsform der Erfindung ist eine Dispersion, bestehend aus einer kontinuierlichen Phase (C) und einer bei 20 °C festen Phase, die in der kontinuierlichen Phase dispergiert ist, wobei die kontinuierliche Phase (C) wenigstens eine Verbindung mit wenigstens zwei Zerewitinoff-aktiven Wasserstoffatomen enthält, und die feste Phase wenigstens einen Füllstoff enthält, wobei der Füllstoff ein Hybridmaterial ist, das jeweils mindestens ein organisches Polymer (P) und mindestens ein anorganisches Partikel umfasst.

Das anorganische Partikel hat einen durchschnittlichen maximalen Durchmesser von höchstens 5 µm, bevorzugt höchstens 1 µm, wovon zumindest eine der Dimensionen, bevorzugt alle, eine Größe von 1-100 nm aufweist/ -en.

In einer bevorzugten Ausführungsform umfasst die erfindungsgemäße Dispersion 10 bis 60 Gew.%, bevorzugt 20 bis 50 Gew.% an fester Phase, bezogen auf die gesamte Dispersion.

In einer bevorzugten Ausführungsform umfasst das Hybridmaterial 0, 1 bis 50 Gew.%, bevorzugt 0,5 bis 25 Gew.%, besonders bevorzugt 2 bis 15 Gew.% an anorganischen Partikeln und 50 bis 99,9 Gew.% an organischem Polymer (P).

In einer bevorzugten Ausführungsform besteht das Hybridmaterial aus jeweils mindestens einem organischen Polymeren (P) und mindestens einem anorganischen Partikel.

In einer Ausführungsform der erfindungsgemäßen Dispersion ist das organische Polymer (P), das im Hybridmaterial enthalten ist, ausgewählt aus der Gruppe umfassend Polystyrol, Poly-(Styrol-co-Acrylnitril), Polyacrylnitril, Polyacrylat, Polymethacrylat, Polyolefine, wie z. B. Polypropylen, Polyethylen, Polyisobutylen, Polybutadien, Polyester, Polyamid, Polyvinylchlorid, Polyethylenterephthalat, Polyvinylacetat, Polyethylenglycol, Polyurethan, Polyharnstoff und Mischungen davon, bevorzugt bestehend aus Poly-(Styrol-co-Acrylnitril), Polyacrylnitril und Mischungen davon.

In einer bevorzugten Ausführungsform der erfindungsgemäßen Dispersion ist das organische Polymer (P), das im Hybridmaterial enthalten ist, ausgewählt aus der Gruppe bestehend aus Polystyrol, Poly-(Styrol-co-Acrylnitril), Polyacrylnitril, Polyacrylat, Polymethacrylat, Polyolefine, wie z. B. Polypropylen, Polyethylen, Polyisobutylen, Polybutadien, Polyester, Polyamid, Polyvinylchlorid, Polyethylenterephthalat, Polyvinylacetat, Polyethylenglycol, Polyurethan, Polyharnstoff und Mischungen davon, bevorzugt bestehend aus Poly-(Styrol-co-Acrylnitril), Polyacrylnitril und Mischungen davon.

Die anorganischen Partikel, die im Hybridmaterial enthalten sind, können erfindungsgemäß Halbmetalloxide, Metalloxide (beispielsweise Oxide der folgenden Metalle: Zn, Al, Si, Fe, Ti, B, Zr, V, etc.), Mischoxide, Carbide, Nitride, Carbonate (z.B. CaCO₃), Hydroxide, Kohlenstoff (wie z. B. Graphit, Graphen, Nano-Röhren, Fasern), anorganische Salze, anorganische Pigmente, Silikate, Siliconharze, Silicone und / oder Silica, oder Mischungen daraus sein, wobei diese genannten Partikelklassen alle gegebenenfalls oberflächenmodifiziert, wie beispielsweise hydrophobisiert oder hydrophilisiert sein können. Zur Hydrophobisierung kann beispielsweise mindestens eine Verbindung aus der Gruppe der Silane, Siloxane, quaternären Ammoniumverbindungen, kationischen Polymere und Fettsäuren und deren Anionen eingesetzt werden. Kohlenstoffbasierte Partikel sind beispielsweise Graphit, Graphen, Nano-Röhren, Fasern, Ruß. Silikat basierte Partikel sind beispielsweise Schichtsilikat, Silica-Sol oder Aerogel.

Als anorganische Partikel im Sinne dieser Erfindung können unter anderem verschiedene Silikat-Materialien eingesetzt werden. Hierfür können Silikat-Materialien verschiedener Herkunft verwendet werden, wie zum Beispiel Silicasol (Kieselsol, wobei Silica in Wasser, (Mono-)Alkohol oder in einem Polyol dispergiert sein kann), oberflächenfunktionalisierte Silicasole, Schichtsilikate, pyrogene Kieselsäure, usw.

Beispiele für erfindungsgemäß einsetzbare, kommerziell erhältliche Silica-Materialien sind Laponit® (synthetisches Schichtsilikat), Optigel® (natürliches Schichtsilikat), Levasil® (Silicasol), Aerosil® (pyrogene Kieselsäure).

Unter Primärpartikel werden in der Regel die Partikel im Quellenzustand verstanden, d. h. nur unmittelbar nach der Nukleation und vor dem Einsetzen von Agglomerationsvorgängen. Prominente Beispiele für Agglomerate, die aus Primärpartikeln aufgebaut sind, sind zum Beispiel pyrogene Kieselsäure (Aerosil) und Ruß. Ruß, zum Beispiel, besteht aus kleinsten, meist kugelförmigen Primärpartikeln, die meist eine Größe von 10-300 nm haben. Diese Primärpartikel sind zu kettenförmigen, teilweise klumpenartigen Aggregaten zusammengewachsen. Viele dieser Aggregate lagern sich zusammen und bilden so die Agglomerate. Die Agglomerate können nicht mehr als Primärpartikel definiert werden. Durch Variation der Herstellbedingungen können sowohl die Größe der Primärteilchen als auch deren Aggregierung gezielt eingestellt werden.

Bevorzugt sind Silikat-basierte Partikel wie Aerosil-Partikel und insbesondere Silika-Sol-Partikel. Aerosile in Polyol sind beispielsweise beschrieben in DE102009001595. In WO 2010/103072 und WO 2010/043530 sind beispielsweise verschiedene Dispersionen auf Basis von Polyolen und Polyetheraminen als Trägermedium und Silica-Sol-Partikel als disperse Phase beschrieben worden, wobei die Partikel teils mit unterschiedlichen Silanen modifiziert worden sind. Vorzugsweise wird das in den erfindungsgemäßen Siliciumdioxid-Dispersionen enthaltene Siliciumdioxid mit mindestens einem Silan (S) modifiziert, Die Modifizierung mit dem Silan (S) erfolgt auf der Oberfläche der in den erfindungsgemäßen Siliciumdioxid-Dispersionen enthaltenen (jeweiligen) Siliciumdioxid-Partikel. Verfahren zur Oberflächenmodifizierung (auch als Silanisierung bezeichnet) als solche sind dem Fachmann bekennt. Es gibt eine große Auswahl an verschiedenen Silanen (S).

Vorzugsweise weist das Silan (S) zusätzlich mindestens eine Silylgruppe auf, die mindestens einfach alkoxyliert ist. Gegebenenfalls können im Silan (S) auch zwei oder mehr Silylgruppen enthalten sein, die jeweils wiederum mindestens einfach alkoxyliert sind. Bevorzugt ist ein Silan (S), das genau eine mindestens einfach alkoxylierte Silylgruppe aufweist, beispielsweise eine ein- bis dreifach, bevorzugt zwei- bis dreifach, besonders bevorzugt eine dreifach alkoxylierte Silylgruppe.

Zudem kann das Silan (S) mindestens einen Alkyl-, Cycloalkyl- und/oder Aryl-Substituenten (Reste) aufweisen, wobei diese Substituenten gegebenenfalls ethylenisch ungesätigte Gruppen und/oder weitere Heteroatome, wie O, S oder N, aufweisen können. Der Einsatz von Silanen, die ethylenisch ungesättigte Gruppen enthalten, können im Fall der radikalisch hergestellten Hybrid-Dispersionen mit in das Polymer eingebaut werden.

Obwohl es nicht zwingend erforderlich ist, dass die Silica-Sol Partikel silanisiert sind, kann Silanisierung zur weiteren Stabilisierung der Formung der Hybrid-Dispersion während der Synthese und Lagerstabilität der Hybrid-Dispersion beitragen.

Erfindungsgemäß weist die kontinuierliche Phase (C) bevorzugt einen Wassergehalt kleiner 5 Gew.%, besonders bevorzugt kleiner 1 Gew.%, ganz besonders bevorzugt kleiner 0,2 Gew.% auf.

Die kontinuierliche Phase (C) enthält erfindungsgemäß wenigstens eine Verbindung mit wenigstens zwei Zerewitinoff-aktiven Wasserstoffatomen.

In einer Ausführungsform besteht die kontinuierliche Phase (C) aus wenigstens einer Verbindung mit wenigstens zwei Zerewitinoff-aktiven Wasserstoffatomen.

In einer Ausführungsform enthält die kontinuierliche Phase (C) genau eine Verbindung mit wenigstens zwei Zerewitinoff-aktiven Wasserstoffatomen.

In einer weiteren Ausführungsform enthält die kontinuierliche Phase (C) mehr als eine Verbindung mit wenigstens zwei Zerewitinoff-aktiven Wasserstoffatomen.

In einer Ausführungsform enthält die kontinuierliche Phase (C) weniger als zehn, bevorzugt weniger als drei Verbindungen mit wenigstens zwei Zerewitinoff-aktiven Wasserstoffatomen.

In einer Ausführungsform der erfindungsgemäßen Dispersion ist die Verbindung mit wenigstens zwei Zerewitinoff-aktiven Wasserstoffatomen ausgewählt aus der Gruppe enthaltend Polyetherpolyole, Kettenverlängerer, Polyesterpolyole, Polyether-Polyester-Polyole, Polycarbonat-Polyole, Polyetheramine und Mischungen davon.

In einer Ausführungsform der erfindungsgemäßen Dispersion ist die Verbindung mit wenigstens zwei Zerewitinoff-aktiven Wasserstoffatomen ausgewählt aus der Gruppe bestehend aus Polyetherpolyolen, Kettenverlängerern, Polyesterpolyolen, Polyether-Polyester-Polyolen, Polycarbonat-Polyolen, Polyetheraminen und Mischungen davon.

In einer bevorzugten Ausführungsform der erfindungsgemäßen Hybrid-Dispersion ist die Verbindung mit wenigstens zwei Zerewitinoff-aktiven Wasserstoffatomen ein Polyetherpolyol, Kettenverlängerer, Polyetheramin oder Polyesterpolyol.

Polyetherole sind beispielsweise Poly-THF-Polyole oder Polyalkoxide auf Basis Propylenoxid, Ethylenoxid, Butylenoxid oder Styroloxid, oder Mischungen der genannten Alkoxide.

In einer besonders bevorzugten Ausführungsform der erfindungsgemäßen Hybrid Dispersion ist die Verbindung mit wenigstens zwei Zerewitinoff-aktiven Wasserstoffatomen ein Polyetherpolyol.

In einer ganz besonders bevorzugten Ausführungsform der erfindungsgemäßen Dispersion ist die Verbindung mit wenigstens zwei Zerewitinoff-aktiven Wasserstoffatomen ein Polyetherpolyol mit einem Molekulargewicht (Mn) von 200 -12000 g/mol, bevorzugt 300-6000 g/mol und/ oder einer OH-Zahl von 10 - 1000 mg KOH/g, bevorzugt 25-500 mg KOH/g, und/ oder einer Funktionalität des Polyolstarters von 2 - 8, bevorzugt 2 - 6.

Die erfindungsgemäß verwendbaren Polyetherpolyole werden nach bekannten Verfahren hergestellt. Beispielsweise können sie durch anionische Polymerisation mit Alkalihydroxiden, wie z. B. Natrium- oder Kaliumhydroxid oder Alkalialkoholaten, wie z. B. Natriummethylat, Natrium-oder Kaliumethylat oder Kaliumisopropylat als Katalysatoren und unter Zusatz mindestens eines Startermoleküls, das 2 bis 8, vorzugsweise 2 bis 6, reaktive Wasserstoffatome aufweist, oder durch kationische Polymerisation mit Lewissäuren, wie Antimonpentachlorid, Borfluorid-Etherat u. a., oder Bleicherde als Katalysatoren hergestellt werden. Ebenso können Polyhydroxyverbindungen durch Doppelmetallcyanidkatalyse aus einem oder mehreren Alkylenoxiden mit 2 bis 4 Kohlenstoffatomen im Alkylenrest hergestellt werden. Auch tertiäre Amine können als Katalysator eingesetzt werden, beispielsweise Triethylamin, Tributylamin, Trimethylamin, Dimethylethanolamin, Imidazol oder Dimethylcyclohexylamin. Für spezielle Einsatzzwecke können auch monofunktionelle Starter in den Polyetheraufbau eingebunden werden.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden.

Als Startermoleküle kommen beispielsweise in Betracht: Wasser, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamin, 2,3-, 2,4- und 2,6-Toluylendiamin (TDA) und 4,4'-, 2,4'- und 2,2'-Diaminodiphenylmethan (M DA) und polymerisches M DA. Als Startermoleküle kommen ferner in Betracht: Alkanolamine, wie z. B. Ethanolamin, N-Methyl- und N-Ethylethanolamin, Dialkanolamine, wie z. B. Diethanolamin, N-Methyl- und N-Ethyldiethanolamin, Trialkanolamine, wie z. B. Triethanolamin, und Ammoniak. Vorzugsweise verwendet werden mehrwertige Alkohole, wie Ethandiol, 1,2- und 2,3-Propandiol, Diethylenglykol, Dipropylenglykol, 1,4-Butandiol, 1,6-Hexandiol, Glycerin, Trimethylolpropan; Pentaerythrit, Sorbitol und Saccharose, und Mischungen davon.

Die Polyetherpolyole, vorzugsweise Polyoxypropylen- und Polyoxypropylenpolyoxyethylenpolyole, besitzen eine Funktionalität von vorzugsweise 2 bis 8 und mittlere Molekulargewichte von 200 bis 12000 g/mol, vorzugsweise 300 bis 6000 g/mol.

Als Polyetherpolyol kann weiterhin Polytetrahydrofuran (Poly-THF-Polyole) eingesetzt werden. Dabei beträgt das zahlenmittlere Molekulargewicht des Polytetrahydrofurans üblicherweise 550 bis 4000 g/mol, bevorzugt 750 bis 3000 g/mol, besonders bevorzugt 800 bis 2500 g/mol.

Die Polyhydroxyverbindungen, insbesondere Polyetherpolyole, können einzeln oder in Form von Mischungen verwendet werden.

Neben den beschriebenen Polyetherpolyolen können beispielsweise auch Polyetherpolyamine und/oder weitere Polyole, ausgewählt aus der Gruppe der Polyesterpolyole, Polythioetherpolyole, Polyesteramide, hydroxylgruppenhaltigen Polyacetalen und hydroxylgruppenhaltigen aliphatischen Polycarbonaten und Acrylaten oder Mischungen aus mindestens zwei der genannten Polyole verwendet werden.

Polyetheramine und deren Herstellung sind beispielsweise in US 4,286,074 A oder WO 2010/133630 beschrieben.

Als Kettenverlängerer werden vorzugsweise Verbindungen mit einem Molekulargewicht von kleiner als 600 g/mol eingesetzt, beispielsweise Verbindungen mit 2 gegenüber Isocyanaten reaktiven Wasserstoffatomen. Diese können einzeln oder aber auch in Form von Mischungen eingesetzt werden. Vorzugsweise werden Diole mit Molekulargewichten kleiner als 300 g/mol eingesetzt. In Betracht kommen beispielsweise aliphatische, cycloaliphatische und/ oder araliphatische Diole mit 2 bis 14, vorzugsweise 2 bis 10 Kohlenstoffatomen, insbesondere Alkylenglykole. Geeignet sind somit auch niedermolekulare hydroxylgruppenhaltige Polyalkylenoxide auf Basis Ethylen- und/oder 1,2-Propylenoxid. Bevorzugte Kettenverlängerer sind (Mono-)Ethylenglykol, 1,2 Propandiol, 1,3-Propandiol, Pentandiol, Tripropylenglykol, 1,10-Decandiol, 1,2-, 1,3-, 1,4-Dihydroxycyclohexan, Diethylenglykol, Triethylenglykol, Dipropylenglykol, 1,4-Butandiol, 1,6-Hexandiol, 2-Methylpropan-1,3-diol, 2,2-Dimethylpropan-1,3-diol, Bisphenol-A-bis(hydroxyether), Ethanolamin, N-Phenyldiethanolamin, Phenylendiamin, Diethyltoluoldiamin, Polyetheramine und Bis-(2-hydroxyethyl)-hydrochinon.

Besonders bevorzugt werden als Kettenverlängerer Monoethylenglykol, Diethylenglykol, 2-Methyl-1,3-Propandiol, 1,4-Butandiol, 1,5-Pentandiol, 1,6- Hexandiol oder Mischungen davon eingesetzt, ganz besonders bevorzugt sind 1,4-Butandiol und/ oder Monoethylenglykol.

Polyesterpolyole werden z.B. hergestellt aus Alkandicarbonsäuren und mehrwertigen Alkoholen, Polythioetherpolyolen, Polyesteramiden, hydroxylgruppenhaltigen Polyacetalen und/ oder hydroxylgruppenhaltigen aliphatischen Polycarbonaten, vorzugsweise in Gegenwart eines Versterungskatalysators. Weitere mögliche Polyole sind beispielsweise im "Kunststoffhandbuch, Band 7, Polyurethane", Carl Hanser Verlag, 3. Auflage 1993, Kapitel 3.1 angegeben.

Die bevorzugt zur Anwendung kommenden Polyesterpolyole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyesterole kann es gegebenenfalls vorteilhaft sein, anstelle der Dicarbonsäuren die entsprechenden Dicarbonsäurederivate, wie Dicarbonsäureester mit 1 bis 4 Kohlenstoffatomen im Alkoholrest, Dicarbonsäureanhydride oder Dicarbonsäurechloride zu verwenden. Beispiele für mehrwertige Alkohole sind Glykole mit 2 bis 10, vorzugsweise 2 bis 6 Kohlenstoffatomen, wie Ethylenglykol, Diethylenglykol, Butandiol-1,4, Pentandiol-1,5, Hexandiol-1,6, Decandiol-1,10, 2,2-Dimethylpropandiol-1,3, Propandiol-1,3 und Dipropylenglykol, Triole mit 3 bis 6 Kohlenstoffatomen, wie z.B. Glycerin und Trimethylolpropan und als höherwertiger Alkohol Pentaerythrit. Je nach den gewünschten Eigenschaften können die mehrwertigen Alkohole allein oder gegebenenfalls in Mischungen untereinander verwendet werden.

Die erfindungsgemäßen Dispersionen können auf mindestens zwei verschiedene Arten hergestellt werden: (1) durch radikalische Polymerisation oder (2) durch Schmelzemulgierung.

### (1) Radikalische Polymerisation

Ein weiterer Gegenstand der vorliegenden Erfindung ist daher auch ein Verfahren (V1) zur Herstellung einer erfindungsgemäßen Dispersion, wobei mindestens ein ethylenisch ungesättigtes Monomeres (A) in Gegenwart mindestens eines anorganischen Partikels, bevorzugt mit einem durchschnittlichen maximalen Durchmesser der Partikel von höchstens 5 µm, wobei bevorzugt zumindest eine der Dimensionen des anorganischen Partikels im Bereich von 1-100 nm liegt, unter Zusatz eines Reaktionsmoderators, eines Radikalinitiators und optional weiteren Komponenten in einer kontinuierliche Phase (C) radikalisch polymerisiert wird. Als optionale weitere Komponente kommt beispielsweise ein Makromer in Frage.

Hierbei ist mit Makromer eine Verbindung gemeint, die mindestens eine Hydroxygruppe und mindestens eine ungesättigte Bindung aufweist, insbesondere ein Polyetherol, das mindestens eine ethylenisch ungesättigte Bindung und mindestens eine Hydroxylgruppe aufweist. Näheres zu Makromeren findet sich auch in M. Ionescu, Chemistry and technology of polyols for polyurethanes, Rapra Technology, 2005, Kap. 6, insbesondere Kap. 6.2.2. Dabei kann der üblicherweise verwendete Dibutylzinndilaurat (DBTL)-Katalysator auch durch Katalysatoren auf Basis von Zink- und/ oder Bismutcarboxylat ersetzt werden.

Falls mindestens ein Makromer zusätzlich zu dem mindestens einen anorganischen Partikel verwendet wird, beträgt dessen Menge in der Regel bis zu 10 Gew.%, bezogen auf die Menge des ethylenisch ungesättigten Monomeren (A).

Die ethylenische ungesättigten Monomeren (A) sind in der Regel mono-funktionell, sie können aber auch eine höhere Funktionalität haben. Beispielshaft erwähnt seien Styrol und Divinylbenzol. Der Einbau von Monomeren mit einer Funktionalität von 2 oder größer resultiert in einer Vernetzung des Polymers. Eine kovalente Vernetzung des organischen Polymers, und so auch für die erfindungsgemäße Dispersion, führt zu einer höheren Temperaturstabilität der dispergierten Partikel, was später in der Anwendung Vorteile aufweisen kann.

In einer Ausführungsform des erfindungsgemäßen Verfahrens sind die ethylenisch ungesättigten Monomere (A) ausgewählt aus der Gruppe enthaltend Styrol, alpha-Methylstyrol, Acrylnitril, Acrylamid, (Meth)acrylsäure, (Meth)acrylsäureester, Hydroxyalkyl(meth)acrylate, Vinylether, Allylether, Divinylbenzol, und Mischungen davon.

In einer weiteren Ausführungsform des erfindungsgemäßen Verfahrens sind die ethylenisch ungesättigten Monomere (A) ausgewählt aus der Gruppe bestehend aus Styrol, alpha-Methylstyrol, Acrylnitril, Acrylamid, (Meth)acrylsäure, (Meth)acrylsäureester, Hydroxyalkyl(meth)acrylate, Vinylether, Allylether, Divinylbenzol, und Mischungen davon.

Hierbei ist die kontinuierliche Phase (C), inklusive bevorzugter Ausführungsformen für die kontinuierliche Phase (C), genauso definiert wie oben bereits ausgeführt.

Für die anorganischen Partikel, einschließlich bevorzugter Ausführungsformen, gelten ebenfalls die bereits oben gegebenen Ausführungen.

In einer Ausführungsform der Erfindung ist der Reaktionsmoderator ausgewählt aus der Gruppe bestehend aus OH- und/ oder SH-funktionellen Verbindungen, wie Alkohole, zum Beispiel 1-Butanol, 2-Butanol, Isopropanol, Ethanol, Methanol, und/ oder Mercaptane wie Ethanthiol, 1-Heptanthiol, 2-Octanthiol, 1-Dodecanthiol, Thiophenol, 2-Ethylhexylthioglycolat, Methylthioglycolat, Cyclohexylmercaptan, sowie Enoletherverbindungen, Morpholine und α-(Benzoyloxy)styrol. Bevorzugt ist der Reaktionsmoderator ausgewählt aus der Gruppe bestehend aus monofunktionellen Alkoholen und Alkylmercaptanen. Besonders bevorzugt werden Alkylmercaptane eingesetzt.

Als Radikalinitiator werden üblicherweise Peroxid- oder Azo-Verbindungen, wie Dibenzoylperoxid, Lauroylperoxid, t-Amylperoxy-2-ethyl-hexanoat, Di-tert-butylperoxid, Diisopropylperoxidcarbonat, tert-Butylperoxy-2-ethylhexanoat, tert-Butylperpivalat, tert-Butylperneodecanoat, tert-Butylperbenzoat, tert-Butylpercronoat, tert-Butylperisobutyrat, tert-Butylperoxy-1-methylpropanoat, tert-Butylperoxy-2-ethylpentanoat, tert-Butylperoxyoctanoat und Di-tert-butylperphthalat, 2,2'-Azo(2,4-dimethylvaleronitril), 2,2'-Azobisisobutyronitril (AIBN), Dimethyl-2,2'-azobisisobutyrat, 2,2'-Azobis(2-methylbutyronitril) (AMBN), 1,1'-Azobis(1-cyclohexane-carbonitril), und Mischungen davon, eingesetzt. Der Anteil an Initiatoren beträgt üblicherweise 0,1 bis 6 Gew.-%, bezogen auf das Gesamtgewicht der zur Herstellung des Polymerpolyols eingesetzten Monomere.

In einer Ausführungsform des erfindungsgemäßen Verfahrens ist der Reaktionsmoderator ausgewählt aus der Gruppe bestehend aus monofunktionellen Alkoholen, Alkylmercaptanen und Mischungen davon, und/ oder der Radikalinitiator ist ausgewählt aus der Gruppe bestehend aus Peroxid- oder Azo-Verbindungen, und Mischungen davon.

Wahlweise kann zusätzlich zu den anorganischen Partikeln auch mindestens ein Makromer verwendet werden.

Die radikalische Polyermisation kann erfindungsgemäß auch als "Seed-Fahrweise" erfolgen, wobei eine Polymerpolyol-Dispersion mit einer multi-modalen Teilchengrößeverteilung erhalten wird, wie bspw. in EP 1, 487, 895 A1 beschrieben.

Die Temperatur während der radikalischen Polymerisation beträgt in der Regel 60° bis 140 °C, bevorzugt 80° bis 130 °C.

Das Verfahren kann als Semi-batch-Verfahren oder kontinuierlich geführt werden. Am Ende der Reaktion werden in der Regel nicht abreagierte Monomere durch Strippen entfernt.

Ein weiterer Gegenstand der Erfindung sind Dispersionen, die nach dem erfindungsgemäßen Verfahren zur Herstellung von Dispersionen, dadurch gekennzeichnet, dass mindestens ein ethylenisch ungesättigtes Monomer (A) in Gegenwart wenigstens eines anorganisches Partikels unter Zusatz eines Reaktionsmoderators und Radikalinitiators, und optional weiterer Komponenten, in einer kontinuierlichen Phase (C) radikalisch polymerisiert wird, herstellbar sind.

### (2) Schmelzemulgierung

Ein weiterer Gegenstand der vorliegenden Erfindung ist auch ein Verfahren (V2) zur Herstellung einer erfindungsgemäßen Dispersion, umfassend die Schritte:
Erwärmen einer Mischung (I) enthaltend wenigstens ein schmelzbares Polymer (P), wenigstens eine kontinuierliche Phase (C) und wenigstens ein anorganisches Partikel, und optional weitere Komponenten, bevorzugt mit einem durchschnittlichen maximalen Durchmesser der Partikel von bevorzugt jeweils höchstens 5 µm, wobei zumindest eine der Dimensionen des anorganischen Partikels im Bereich von 1-100 nm liegt,
Durchmischen, so dass wenigstens ein schmelzbares Polymer in geschmolzenem Zustand in der Mischung (I) vorzugsweise in Form von fein verteilten Tropfen vorliegt, Abkühlen der Mischung (I).

Hierbei ist die kontinuierliche Phase (C), inklusive bevorzugter Ausführungsformen für die kontinuierliche Phase (C), genauso definiert wie oben bereits ausgeführt.

Die optionalen weiteren Komponenten können zum Beispiel Stabilisatoren sein. Die optionalen weiteren Komponenten machen in der Regel bis zu 10 Gew.% der gesamten Dispersion aus.

Für die anorganischen Partikel, einschließlich bevorzugter Ausführungsformen, gelten ebenfalls die bereits oben gegebenen Ausführungen.

Das schmelzbare Polymer, inklusive bevorzugter Ausführungsformen, ist in einer Ausführungsform des erfindungsgemäßen Verfahrens ausgewählt aus der Gruppe, die bereits weiter oben für das organische Polymer (P) gegeben wurde.

In einer Ausführungsform des erfindungsgemäßen Verfahrens besteht das Verfahren zur Herstellung einer erfindungsgemäßen Dispersion aus den genannten Schritten.

Sobald die kontinuierliche Phase und die den aufgeschmolzenen Feststoff enthaltende disperse Phase miteinander vereinigt sind, wird die Zusammensetzung im Rahmen der vorliegenden Erfindung auch als Rohemulsion bezeichnet. Die Rohemulsion kann dann in einer Emulgierapparatur behandelt werden, wobei die Tropfen fein zerkleinert werden (sog. Feinemulgierung). Der Prozessschritt des Feinemulgierens kann diskontinuierlich, beispielsweise in einem Rührbehälter, oder kontinuierlich durchgeführt werden. Kontinuierlich arbeitende Maschinen und Apparaturen zur Emulgierung sind dem Fachmann bekannt und sind zum Beispiel Kolloidmühlen, Zahnkranzdispergiermaschinen, Zweischneckenextruder, und andere Bauformen dynamischer Mischer, weiterhin Hochdruckhomogenisatoren, Pumpen mit nachgeschalteten Düsen, Ventilen, Membranen oder sonstigen engen Spaltgeometrien, statische Mischer, Mikromischsysteme sowie Ultraschall-Emulgiersysteme. Bevorzugt werden Zahnkranzdispergiermaschinen, Zweischneckenextruder oder Hochdruckhomogenisatoren, und Kombinationen davon, eingesetzt.

Nach dem Feinemulgieren kann die Feinemulsion unter den Schmelzpunkt bzw. die Glasübergangstemperatur Tg oder den Schmelzbereich des schmelzbaren Feststoffes abgekühlt werden. Dabei erstarrt der Feststoff in der Dispersphase in partikulärer Form.

Geeignete Verfahren zum Schmelzemulgieren werden beispielsweise beschrieben in Schultz S., Wagner G., Urban K., Ulrich J., Chem. Eng. Technol. 2004, 27, No. 4, 361-368, "Highpressure homogenization as a process for emulsion formation", in Urban K., Wagner G., Schaffner D., Röglin D., Ulrich J., Chem. Eng. Technol. 2006, 29, No. 1, 24-31, "Rotor-stator and disc systems for emulsification processes" und in EP 1 008 380 B1.

Erfindungsgemäß liegt dabei die Temperatur im ersten Verfahrensschritt (Erwärmen) über der Schmelztemperatur bzw. der Glasübergangstemperatur Tg des wenigstens einen schmelzbaren Feststoffes, insbesondere des thermoplastischen Polymers (P).

Erfindungsgemäß ist es auch möglich, dass das Erwärmen im ersten Verfahrensschritt in einem Extruder durchgeführt wird, bevorzugt in einem Zweischneckenextruder.

Ein weiterer Gegenstand der vorliegenden Erfindung ist auch die Verwendung einer erfindungsgemäßen Dispersion zur Herstellung von Polyurethanen (PU), oder als Lackrohstoff für die Automobilindustrie, als Dispersionsrohstoff für Bautenanstriche, Dichtmasse, Zement, Papier, Textil, Klebrohstoff, als Treibstoffadditiv oder Dach-Beschichtung, zum Polieren von Oberflächen oder zum Einsatz in Epoxysystemen.

Die erfindungsgemäßen Dispersionen bzw. die nach einem erfindungsgemäßen Verfahren erhältlichen Hybrid Dispersionen eignen sich insbesondere für die Herstellung von Polyurethanen.

Die vorliegende Erfindung betrifft daher auch die Verwendung einer wie zuvor beschriebenen Dispersion oder einer Dispersion erhältlich nach einem wie zuvor beschriebenen Verfahren zur Herstellung von Polyurethanen.

Polyurethan im Sinn der Erfindung umfasst dabei alle bekannten Polyisocyanat-Polyadditionsprodukte, wie z. B. Polyharnstoffe.

Diese umfassen insbesondere massive Polyisocyanat-Polyadditionsprodukte, wie Duromere, Polyurethan-Gießharze oder thermoplastische Polyurethane, und Schaumstoffe auf Basis von Polyisocyanat-Polyadditionsprodukten, wie Weichschaumstoffe, Halbhartschaumstoffe, Hartschaumstoffe oder Integralschaumstoffe sowie Polyurethanbeschichtungen und Bindemittel. Weiter sind unter Polyurethanen im Sinn der Erfindung Polymerblends, enthaltend Polyurethane und weitere Polymere, sowie Schaumstoffe aus diesen Polymerblends zu verstehen. Bevorzugt können die erfindungsgemäß herstellbaren Dispersionen in Polyurethan-Weichschaumstoff-Formulierungen, in Polyurethan-Hartschaum-Formulierungen, in Polyurethan-Integralschaum-Fromulierungen, in Polyurethan-Schuh-Formulierungen, in Polyurethan-Elastomer-Formulierungen, in Polyurethane-Gießharz-Formulierungen, in thermoplastischen Polyurethan-Formulierungen oder in mikrozellulären Polyurethan-Schaumstoffen eingesetzt werden.

Eine Übersicht über Polyurethane, ihre Eigenschaften und Anwendungen wird beispielsweise im "Kunstoffhandbuch, Band 7,Polyurethane" (Carl-Hanser-Verlag, 3. Auflage 1993) gegeben.

Verfahren und Einsatzstoffe für die Herstellung von Polyurethanen sind dem Fachmann grundsätzlich bekannt. Üblicherweise werden mindestens eine Polyol-Komponente und/ oder Polyetheramin-Komponente und mindestens ein Polyisocyanat umgesetzt.

Daher betrifft die vorliegende Erfindung auch ein Verfahren zur Herstellung eines Polyurethans, wobei mindestens eine wie zuvor beschriebene Dispersion oder eine Dispersion erhältlich nach einem wie zuvor beschriebenen Verfahren mit mindestens einem Polyisocyanat umgesetzt wird.

Die Herstellung der Polyurethane erfolgt erfindungsgemäß insbesondere durch Umsetzung von organischen und/oder modifizierten organischen Polyisocyanaten mit den oben beschriebenen erfindungsgemäßen Dispersionen, und gegebenenfalls weiteren gegenüber Isocyanaten reaktive Wasserstoffatome aufweisenden Verbindungen, in Gegenwart von Katalysatoren, gegebenenfalls Wasser und/ oder anderen Treibmitteln und gegebenenfalls weiteren Hilfs- und Zusatzstoffen.

Erfindungsgemäß kann die erfindungsgemäße Hybrid-Dispersion oder die nach einem erfindungsgemäßen Verfahren erhältliche Dispersion alleine oder zusammen mit mindestens einem weiteren Polyol oder zusammen mit mindestens einem Graftpolyol oder zusammen mit mindestens einem weiteren Polyol und mindestens einem Graftpolyol eingesetzt werden.

Zu den neben den erfindungsgemäßen Dispersionen verwendbaren weiteren Ausgangskomponenten ist im Einzelnen Folgendes auszuführen:
Als Polyisocyanate können erfindungsgemäß grundsätzlich alle dem Fachmann bekannten Polyisocyanate eingesetzt werden, insbesondere aliphatische, cycloaliphatische, araliphatische und vorzugsweise aromatische mehrwertige Isocyanate.

Geeignet sind beispielsweise: Alkylendiisocyanate mit 4 bis 12 Kohlenstoffatomen im Alkylenrest, wie 1,12-Dodecandiisocyanat, 2-Ethyl-tetramethylen-1,4-diisocyanat, 2-Methylpentamethylen-1,5-diisocyanat, Tetramethylen-1,4-diisocyanat und vorzugsweise Hexamethylen-1,6-diisocyanat; cycloaliphatische Diisocyanate, wie Cyclohexan-1,3-und -1,4-diisocyanat sowie beliebige Gemische dieser Isomeren, I-Isocyanato-3,3,5-tri-methyl-5-isocyanatomethylcyclohexan (IPDI), 2,4- und 2,6-Hexahydrotoluylendiisocyanat sowie die entsprechenden Isomerengemische, 4,4'-, 2,2'- und 2, 4'-Dicyclohexylmethandiisocyanat sowie die entsprechenden Isomerengemische, und vorzugsweise aromatische Di- und Polyisocyanate, wie z. B. 2,4- und 2,6-Toluylendiisocyanat und die entsprechenden Isomerengemische, 4,4'-, 2,4'- und 2,2'-Diphenylmethandiisocyanat und die entsprechenden Isomerengemische, Mischungen aus 4,4'- und 2,2'-Diphenylmethandiisocyanaten, Polyphenylpolymethylenpolyisocyanate, Mischungen aus 4,4'- , 2,4'- und 2,2'-Diphenylmethandiisocyanaten und Polyphenylpolymethylenpolyisocyanaten (Roh-MDI) und Mischungen aus Roh-MDI und Toluylendiisocyanaten.

Die organischen Di- und Polyisocyanate können einzeln oder in Form ihrer Mischungen eingesetzt werden.

Bevorzugt verwendet werden Toluylendiisocyanat, Gemische aus Diphenylmethandiisocyanat-Isomeren, Gemische aus Diphenylmethandiisocyanat und Roh-MDI oder Toluylendiisocyanat mit Diphenylmethandiisocyanat und/oder Roh-MDI. Besonders bevorzugt eingesetzt werden Gemische aus Diphenylmethandiisocyanat-Isomeren mit Anteilen an 2,4'-Diphenylmethandiisocyanat von mindestens 30 Gew.-%.

Häufig werden auch so genannte modifizierte mehrwertige Isocyanate, d. h. Produkte, die durch chemische Umsetzung organischer Di- und/oder Polyisocyanate erhalten werden, verwendet. Beispielhaft genannt seien Ester-, Harnstoff-, Biuret-, Allophanat-, Carbodiimid-, Isocyanurat-, Uretdion- und/oder Urethangruppen enthaltende Di-und/oder Polyisocyanate. Im Einzelnen kommen beispielsweise in Betracht: Urethangruppen enthaltende organische, vorzugsweise aromatische, Polyisocyanate mit NCO-Gehalten von 43 bis 5 Gew.-%, vorzugsweise von 33 bis 11 Gew.-%, bezogen auf das Gesamtgewicht, durch Umsetzung beispielsweise mit niedermolekularen Diolen, Triolen, Dialkylenglykolen, Trialkylenglykolen oder Polyoxyalkylenglykolen mit mittleren Molekulargewichten bis 6000 g/mol, insbesondere mit mittleren Molekulargewichten bis 1500 g/mol, modifiziertes 4,4'-Diphenylmethandiisocyanat, modifizierte 4,4'- und 2,4'-Diphenylmethandiisocyanatmischungen oder modifiziertes Roh-MDI oder 2, 4- bzw. 2,6-Toluylendiisocyanat. Die Di- bzw. Polyoxyalkylenglykole können dabei einzeln oder als Gemische eingesetzt werden, beispielsweise genannt seien: Diethylen-, Dipropylenglykol, Polyoxyethylen-, Polyoxypropylen- und Polyoxypropylenpolyoxyethenglykole, -triole und/oder -tetrole. Geeignet sind auch NCO-Gruppen enthaltende Prepolymere mit NCO-Gehalten von 2 bis 35 Gew.-%, vorzugsweise von 5 bis 28 Gew.-%, bezogen auf das Gesamtgewicht, hergestellt aus Polyester- und/oder vorzugsweise Polyetherpolyolen und 4,4'-Diphenylmethandiisocyanat, Mischungen aus 2,4'- und 4,4'-Diphenylmethandiisocyanat, 2,4- und/oder 2,6-Toluylendiisocyanaten oder Roh-MDI. Geeignet sind ferner flüssige, Carbodiimidgruppen und/oder Isocyanuratringe enthaltende Polyisocyanate mit NCO-Gehalten von 43 bis 5 Gew.-%, vorzugsweise 33 bis 11 Gew.-%, bezogen auf das Gesamtgewicht, z. B. auf Basis von 4,4'-, 2,4'- und/oder 2, 2'-Diphenylmethandiisocyanat und/oder 2,4- und/oder 2,6-Toluylendiisocyanat.

Die modifizierten Polyisocyanate können erfindungsgemäß auch miteinander oder mit unmodifizierten organischen Polyisocyanaten wie z. B. 2,4'-, 4,4'-Diphenylmethandiisocyanat, Roh-MDI, 2,4- und/oder 2,6-Toluylendiisocyanat gemischt werden.

Besonders geeignet als modifizierte organische Polyisocyanate sind NCO-gruppenhaltige Prepolymere, die vorteilhafterweise gebildet werden aus der Reaktion der Isocyanate mit Polyolen sowie gegebenenfalls weiteren Verbindungen mit gegenüber Isocyanaten reaktiven funktionellen Gruppen.

Neben den oben beschriebenen erfindungsgemäßen Dispersionen werden gegebenenfalls weitere gegenüber Isocyanaten reaktive Wasserstoffatome aufweisende Verbindungen zugegeben.

Hierfür kommen beispielsweise Verbindungen mit mindestens zwei reaktiven Wasserstoffatomen in Frage. Dabei werden zweckmäßigerweise solche mit einer Funktionalität von 2 bis 8, vorzugsweise 2 bis 6, und einem mittleren Molekulargewicht von 200 bis 12000 g/mol, vorzugsweise von 300 bis 6000 g/mol, verwendet. Die Hydroxylzahl der Polyhydroxylverbindungen beträgt dabei in aller Regel 10 bis 1000 mg KOH/g und vorzugsweise 25 bis 500 mg KOH/g.

Die Zusammenstellung der Polyole für die Herstellung von Polyurethanen ist bereits oben beschrieben.

Geeignete Polyesterpolyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen, mehrwertigen Alkoholen, vorzugsweise Diolen, mit 2 bis 12 Kohlenstoffatomen, vorzugsweise 2 bis 6 Kohlenstoffatomen, nach üblichen Verfahren hergestellt werden. Üblicherweise werden die organischen Polycarbonsäuren und/oder -derivate und mehrwertigen Alkohole, vorteilhafterweise im Molverhältnis von 1 zu 1 bis 1 zu 1,8, vorzugsweise von 1 zu 1,05 bis 1 zu 1,2, katalysatorfrei oder vorzugsweise in Gegenwart von Veresterungskatalysatoren, zweckmä-βigerweise in einer Atmosphäre aus Inertgas, wie z. B. Stickstoff, Kohlenmonoxid, Helium, Argon u. a., in der Schmelze bei Temperaturen von 150 bis 250°C, vorzugsweise 180 bis 220°C, gegebenenfalls unter vermindertem Druck bis zu der gewünschten Säurezahl, die vorteilhafterweise kleiner als 10, vorzugsweise kleiner als 2 ist, polykondensiert.

Als hydroxylgruppenhaltige Polyacetale kommen z. B. die aus Glykolen, wie Diethylenglykol, Triethylenglykol, 4,4'-Dihydroxyethoxydiphenyldimethylmethan, Hexandiol und Formaldehyd herstellbaren Verbindungen in Frage. Auch durch Polymerisation cyclischer Acetale lassen sich geeignete Polyacetale herstellen. Als Hydroxylgruppen aufweisende Polycarbonate kommen solche der an sich bekannten Art in Betracht, die beispielsweise durch Umsetzung von Diolen, wie 1,3-Propandiol, 1,4-Butandiol und/oder 1,6-Hexandiol, Diethylenglykol, Triethylenglykol oder Tetraethylenglykol mit Diarylcarbonaten, z. B. Diphenylcarbonat, oder Phosgen hergestellt werden können. Zu den Polyesteramiden zählen z. B. die aus mehrwertigen, gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate. Geeignete Polyetherpolyamine können aus den oben genannten Polyetherpolyolen nach bekannten Verfahren hergestellt werden. Beispielhaft genannt seien die Cyanoalkylierung von Polyoxyalkylenpolyolen und anschließende Hydrierung des gebildeten Nitrils oder die teilweise oder vollständige Aminierung von Polyoxyalkylenpolyolen mit Aminen oder Ammoniak in Gegenwart von Wasserstoff und Katalysatoren.

Die Polyhydroxyverbindungen können einzeln oder in Form von Mischungen verwendet werden.

Die Polyurethane können erfindungsgemäß ohne oder unter Mitverwendung von Kettenverlängerungs- und/oder Vernetzungsmitteln hergestellt werden. Als Kettenverlängerungs- und/oder Vernetzungsmittel können Diole und/oder Triole mit Molekulargewichten kleiner als 600 g/mol, vorzugsweise 62 bis 400 g/mol, besonders bevorzugt bis 200 g/mol verwendet werden. In Betracht kommen beispielsweise aliphatische, cycloaliphatische und/oder araliphatische Diole mit 2 bis 14, vorzugsweise 4 bis 10 Kohlenstoffatomen, wie z. B. 1,3,-Propandiol, 1,2-Propandiol, 2-Methyl-1,3-Propandiol, 3-Methyl-1,5-Pentandiol, Neopentylglycol, Pentandiol, Tripropylenglycol, 1,10-Decandiol, o-, m-, p-Dihydroxycyclohexan, Diethylenglykol, Dipropylenglykol und vorzugsweise Ethylenglykol,1,4-Butandiol, 1,6-Hexandiol und Bis-(2-hydroxyethyl)-hydrochinon, Triole, wie 1,2,4- und 1,3,5-Trihydroxycyclohexan, Triethanolamin, Diethanolamin, Glycerin und Trimethylolpropan und niedermolekulare hydroxylgruppenhaltige Polyalkylenoxide auf Basis Ethylen- und/oder 1,2-Propylenoxid und den vorgenannten Diolen und/oder Triolen als Startermoleküle.

Sofern zur erfindungsgemäßen Herstellung der Polyurethane Kettenverlängerungsmittel, Vernetzungsmittel oder Mischungen davon Anwendung finden, kommen diese zweckmäßigerweise in Mengen von 1 bis 60 Gew.-%, vorzugsweise 1,5 bis 50 Gew.-% und insbesondere 2 bis 40 Gew.-%, bezogen auf das Gewicht der Summe der Polyolverbindungen, zum Einsatz.

Ferner sind bei der Herstellung von Polyurethanschaumstoffen Treibmittel und/oder Wasser zugegen. Als Treibmittel können neben Wasser noch zusätzlich allgemein bekannte chemisch und/oder physikalisch wirkende Verbindungen eingesetzt werden. Unter chemischen Treibmitteln versteht man Verbindungen, die durch Reaktion mit Isocyanat gasförmige Produkte bilden, wie beispielsweise Wasser oder Ameisensäure. Unter physikalischen Treibmitteln versteht man Verbindungen, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe, und andere Verbindungen, wie zum Beispiel perfluorierte Alkane, wie Perfluorhexan, Fluorchlorkohlenwasserstoffe, und Ether, Ester, Ketone, Acetale sowie anorganische und organische Verbindungen, die beim Erhitzen Stickstoff freisetzen, oder Mischungen daraus, beispielsweise (cyclo)aliphatische Kohlenwasserstoffe mit 4 bis 8 Kohlenstoffatomen, oder Fluorkohlenwasserstoffe, wie Solkane^{®} 365 mfc der Firma Solvay Fluorides LLC.

Als Katalysatoren können alle zur Polyurethanherstellung üblichen Katalysatoren eingesetzt werden. Solche Katalysatoren werden beispielsweise im "Kunststoffhandbuch, Band 7, Polyurethane", Carl Hanser Verlag, 3. Auflage 1993, Kapitel 3.4.1 beschrieben. Dabei kommen beispielsweise organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexanoat und Zinn-(II)-laurat und die Dialkylzinn-(IV)-salze von organischen Carbonsäuren, z.B. Dibutylzinndiacetat, Dibutylzinndilaurat, Dibutylzinnmaleat und Dioctylzinndiacetat, sowie Bismutcarboxylate, wie Bismut(III)-neodecanoat, Bismut-2-etyhlhexanoat und Bismutoctanoat oder Mischungen in Betracht. Weitere mögliche Katalysatoren sind stark basische Aminkatalysatoren. Beispiele hierfür sind Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-,N-Cyclohexylmorpholin, N,N,N',N'-Tetramethylethylendiamin, N,N,N',N'-Tetramethyl-butandiamin, N,N,N',N'-Tetramethyl-hexandiamin, Pentamethyl-diethylentriamin, Tetramethyldiaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl- und N-Ethyldiethanolamin und Dimethylethanolamin. Die Katalysatoren können einzeln oder als Mischungen verwendet werden. Gegebenenfalls werden als Katalysatoren Mischungen aus Metallkatalysatoren und basischen Aminkatalysatoren verwendet.

Insbesondere bei Verwendung eines größeren Polyisocyanatüberschusses kommen als Katalysatoren ferner in Betracht: Tris-(dialkylaminoalkyl)-s-hexahydrotriazine, vorzugsweise Tris-(N,N-dimethylaminopropyl)-s-hexahydrotriazin, Tetraalkylammoniumhydroxide, wie Tetramethylammoniumhydroxid, Alkalihydroxide, wie Natriumhydroxid, und Alkalialkoholate, wie Natriummethylat und Kaliumisopropylat, sowie Alkalisalze von langkettigen Fettsäuren mit 10 bis 20 C-Atomen und gegebenenfalls seitenständigen Hydroxylgruppen.

Vorzugsweise verwendet werden 0,001 bis 5 Gew.-%, insbesondere 0,05 bis 2 Gew. % Katalysator bzw. Katalysatorkombination, bezogen auf das Gewicht der Aufbaukomponenten.

Der Reaktionsmischung zur erfindungsgemäßen Herstellung der Polyurethane können gegebenenfalls noch weitere Hilfsmittel und/oder Zusatzstoffe zugesetzt werden. Genannt seien beispielsweise Flammschutzmittel, Stabilisatoren, Füllstoffe, Farbstoffe, Pigmente und Hydrolyseschutzmittel sowie fungistatische und bakteriostatisch wirkende Substanzen.

Geeignete Flammschutzmittel sind beispielsweise Trikresylphosphat, Tris-(2-chlorethyl)phosphat, Tris-(2-chlorpropyl)-phosphat, Tetrakis-(2-chlorethyl)-ethylendiphosphat, Dimethylmethanphosphonat, Diethanolaminomethylphosphonsäurediethylester sowie handelsübliche halogenhaltige und halogenfreie Flammschutzmittel. Außer den bereits genannten halogensubstituierten Phosphaten können auch anorganische oder organische Flammschutzmittel, wie roter Phosphor, Aluminiumoxidhydrat, Antimontrioxid, Arsenoxid, Ammoniumpolyphosphat und Calciumsulfat, Blähgraphit oder Cyanursäurederivate, wie z. B. Melamin, oder Mischungen aus mindestens zwei Flammschutzmitteln, wie z. B. Ammoniumpolyphosphaten und Melamin sowie gegebenenfalls Maisstärke oder Ammoniumpolyphosphat, Melamin und Blähgraphit und/oder gegebenenfalls aromatische Polyester zum Flammfestmachen der Polyisocyanatpolyadditionsprodukte verwendet werden. Besonders wirksam erweisen sich dabei Zusätze an Melamin. Im Allgemeinen hat es sich als zweckmässig erwiesen, 5 bis 50 Gew.-%, vorzugsweise 5 bis 30 Gew.-%, der genannten Flammschutzmittel für jeweils 100 Gew.-% der übrigen eingesetzten Komponenten zu verwenden.

Als Stabilisatoren werden insbesondere oberflächenaktive Substanzen, d.h. Verbindungen eingesetzt, welche zur Unterstützung der Homogenisierung der Ausgangsstoffe dienen und gegebenenfalls auch geeignet sind, die Zellstruktur des Polyurethans zu regulieren. Genannt seien beispielsweise Emulgatoren, wie die Natriumsalze der Rizinusölsulfate oder Fettsäuren sowie Salze von Fettsäuren mit Aminen, z. B. ölsaures Diethylamin, stearinsaures Diethanolamin, ricinolsaures Diethanolamin, Salze von Sulfonsäuren, z. B. Alkali- oder Ammoniumsalze von Dodecylbenzol- oder Dinaphthylmethandisulfonsäure und Ricinolsäure; Schaumstabilisatoren, wie Siloxanoxalkylenmischpolymerisate und andere Organopolysiloxane, oxethylierte Alkylphenole, oxethylierte Fettalkohole, Paraffinöle, Rizinusöl- bzw. Rizinolsäureester, Türkischrotöl und Erdnussöl, und Zellregler, wie Paraffine, Fettalkohole und Dimethylpolysiloxane. Als Stabilsatoren kommen vorwiegend Organopolysiloxane zur Anwendung, die wasserlöslich sind. Dabei handelt es sich um Polydimethylsiloxanreste, an denen eine Polyetherkette aus Ethylenoxid und Propylenoxid angepfropft ist. Die oberflächenaktiven Substanzen werden üblicherweise in Mengen von 0,01 bis 5 Gew.-%, bezogen auf 100 Gew.-% der übrigen eingesetzten Komponenten eingesetzt.

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im Einzelnen seien beispielhaft genannt: anorganische Füllstoffe, wie silikatische Mineralien, beispielsweise Schichtsilikate, wie Antigorit, Serpentin, Hornblenden, Ampibole, Chrisotil und Talkum, Metalloxide, wie Kaolin, Aluminiumoxide, Titanoxide und Eisenoxide, Metallsalze, wie Kreide, Schwerspat und anorganische Pigmente, wie Cadmiumsulfid und Zinksulfid, sowie Glas u. a.. Vorzugsweise verwendet werden Kaolin (China Clay), Aluminiumsilikat und Copräzipitate aus Bariumsulfat und Aluminiumsilikat sowie natürliche und synthetische faserförmige Mineralien, wie Wollastonit, Metall- und insbesondere Glasfasern verschiedener Länge, die gegebenenfalls geschlichtet sein können. Als organische Füllstoffe kommen beispielsweise in Betracht: Kohle, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstofffasern. Die anorganischen und organischen Füllstoffe können einzeln oder als Gemische verwendet werden und werden der Reaktionsmischung vorteilhafterweise in Mengen von 0,5 bis 50 Gew.-%, vorzugsweise 1 bis 40 Gew.-%, bezogen auf das Gewicht der übrigen eingesetzten Komponenten, eingesetzt, wobei jedoch der Gehalt an Matten, Vliesen und Geweben aus natürlichen und synthetischen Fasern Werte bis 80 Gew.-% erreichen kann.

Nähere Angaben über die oben genannten anderen üblichen Hilfs- und Zusatzstoffe sind der Fachliteratur, beispielsweise der Monographie von J. H. Saunders und K. C. Frisch "High Polymers" Band XVI, "Polyurethanes", Teil 1 und 2, Verlag Interscience Publishers 1962 bzw. 1964, oder dem oben zitierten Kunststoffhandbuch, "Polyurethane", Band VII, Hanser-Verlag München, Wien, 1. bis 3. Auflage, zu entnehmen.

Zur Herstellung der erfindungsgemäßen Polyurethane werden die organischen und/oder modifizierten organischen Polyisocyanate, die Dispersion und gegebenenfalls die weiteren gegenüber Isocyanaten reaktive Wasserstoffatome aufweisenden Verbindungen sowie weiteren Bestandteilen in solchen Mengen zur Umsetzung gebracht, dass das Äquivalenzverhältnis von NCO-Gruppen der Polyisocyanate zur Summe der reaktiven Wasserstoffatome der übrigen Komponenten weniger als 0,10 : 10, vorzugsweise weniger als 0,70 : 5, beträgt.

### Beispiele

Nachfolgend werden einige Beispiele zur Veranschaulichung der Erfindung angegeben. Diese Beispiele sollen keinesfalls den Umfang der Erfindung einschränken, sondern sind nur illustrierend zu verstehen.

Die Viskositäten wurden gemäß ASTM D7042 gemessen; die OH-Zahlen wurden gemäß DIN 53240 bestimmt.

Ausgangsmaterialien:
Polyol 1: Polyetherol auf Basis von Dipropylenglycol, Propylenoxid und Ethylenoxid mit einer OH-Zahl von 63 mg KOH/g und einer Viskosität von 300 mPas bei 25°C.
Polyol 2: Polyetherol auf Basis von vicinalem TDA als Starter, Ethylenoxid und Propylenoxid, mit einer Hydroxylzahl von 160 mg KOH/g, und einer Viskosität von 650 mPas bei 25°C.
Polyol 3: Polyetherol auf Basis von Glycerin, Propylenoxid und Ethylenoxid mit einer OH-Zahl von 56 mg KOH/g und einer Viskosität von 470 mPas bei 25°C.
Polyol 4: Polyetherol auf Basis von Glycerin, Propylenoxid und Ethylenoxid mit einer OH-Zahl von 28 mg KOH/g und einer Viskosität von 1100 mPas bei 25°C.
Polyol 5: Polyetherol auf Basis von Glycerin, Propylenoxid und Ethylenoxid mit einer OH-Zahl von 35 mg KOH/g und einer Viskosität von 850 mPas bei 25°C.
Polyol 6: PolyTHF^{®} 2000 ist ein zweifunktionelles Polyetherol, welches durch die Polymerisation von Tetrahydrofuran hergestellt wird, mit einer Hydroxyzahl von 56 mg KOH/g.
Polyol 7: T 5000 Polyetheramin ist ein dreifunktionelles, primäres Amin mit einem mittleren Molekulargewicht von 5000 g/mol und mit der Aminzahl von 30 mg KOH/g.
Polyol 8: D 2000 Polyetheramin ist ein zweifunktionelles, primäres Amin mit einem mittleren Molekulargewicht von 2000 g/mol und mit der Aminzahl von 56 mg KOH/g.
Polyol 9: Polyetherol auf Basis von Glycerin, Monoethylenglycol, Propylenoxid und Ethylenoxid mit einer OH-Zahl von 48 mg KOH/g und einer Viskosität von 540 mPas bei 25°C.
Polyol 10: Polymerpolyetherol auf Basis von Glycerin, Propylenoxid und Ethylenoxid, mit einem Feststoffgehalt (Styrol/Acrylnitril-Partikel, bimodale Partikelverteilung) von 45 Gew.-%, einer OH-Zahl von 30 mg KOH/g und einer Viskosität von 4300 mPas bei 25°C.
Polyol 11: Polymerpolyetherol auf Basis von Glycerin, Propylenoxid und Ethylenoxid, mit einem Feststoffgehalt (Styrol/Acrylnitril-Partikel) von 45 Gew.-%, einer OH-Zahl von 20 mg KOH/g und einer Viskosität von 7400 mPas bei 25°C.
Polyol 12: Polyetherol auf Basis von Glycerin, Propylenoxid und Ethylenoxid mit einer OH-Zahl von 27 mg KOH/g und einer Viskosität von 1225 mPas bei 25°C.
Polyol 13: Polyetherol auf Basis von Propylenglycol, Propylenoxid und Ethylenoxid mit einer OH-Zahl von 29 mg KOH/g und einer Viskosität von 760 mPas bei 25°C.
Polyol 14: Polymerpolyetherol auf Basis von Glycerin, Propylenoxid und Ethylenoxid, mit einem Feststoffgehalt (Styrol/Acrylnitril-Partikel, monomodale Partikelverteilung) von 44 Gew.-%, einer OH-Zahl von 31 mg KOH/g und einer Viskosität von 4500 mPas bei 25°C.

Makromer 1: Sechsfunktionelles Polyetherol mit einer Hydroxyzahl von 18,4 mg KOH/g, bestimmt nach DIN 53240, umgesetzt mit TMI^{®} (Meta).

TMI^{®} (Meta) = ungesättigtes aliphatisches Isocyanat der Firma Cytec Industries

DBTL: Dibutylzinndilaurat, TRIGON Chemie GmbH

Vazo^{®} 64 = Radikalinitiator der Firma DuPont

Silica-Polyol 1: 20% Silica-Dispersion in dem Polyol 1, hergestellt durch Versetzen eines wässrigen Kieselsols (Levasil® 200E/20% von H.C. Starck GmbH & Co KG, Leverkusen, Deutschland, Teilchendurchmesser basierend auf der BET-Methode: 15 nm, pH 2,5, Siliciumdioxid-Konzentration: 20 Gew.-%) mit 1-Methoxy-2-Propanol und Polyol 1, und anschließendes Abdestillieren des Lösungsmittels (wie beschrieben in WO 2010/043530 A1).

Silica-Polyol 2: 30% Silica-Dispersion in dem Polyol 2, hergestellt durch Versetzen eines wässrigen Kieselsols (Levasil® 200E/20% von H.C. Starck GmbH & Co KG, Leverkusen, Deutschland, Teilchendurchmesser basierend auf der BET-Methode: 15 nm, pH 2,5, Siliciumdioxid-Konzentration: 20 Gew.-%) mit Isopropanol und Polyol 2, anschließendes Abdestillieren des Lösungsmittels, und Versetzen der Dispersion mit Methyltrimethoxysilan (von Merck Schuchardt OHG, Hohenbrunn, Deutschland) (wie beschrieben in WO 2010/043530 A1).

Silica-Polyol 3: 15% Silica-Dispersion in dem Polyol 3, hergestellt durch Versetzen eines wässrigen Kieselsols (Levasil® 200E/20% von H.C. Starck GmbH & Co KG, Leverkusen, Deutschland, Teilchendurchmesser basierend auf der BET-Methode: 15 nm, pH 2,5, Siliciumdioxid-Konzentration: 20 Gew.-%) mit 1-Methoxy-2-Propanol und Polyol 3, anschließendes Abdestillieren des Lösungsmittels, und Versetzen der Dispersion mit Methyltrimethoxysilan (wie beschrieben in WO 2010/043530 A1).

Silica-Polyol 4: 14% Silica-Dispersion in Polyol 4, hergestellt durch Versetzen eines wässrigen Kieselsols (Levasil® 200E/20% von H.C. Starck GmbH & Co KG, Leverkusen, Deutschland, Teilchendurchmesser basierend auf der BET-Methode: 15 nm, pH 2,5, Siliciumdioxid-Konzentration: 20 Gew.-%) mit Iso- und n-Propanol und Polyol 4, anschließendes Abdestillieren des Lösungsmittels, und Versetzen der Dispersion mit Isobutyltriethoxysilan (von Sigma-Aldrich Chemie GmbH, Steinheim, Deutschland) (wie beschrieben in WO 2010/043530 A1).

Silica-B14: 30% Silica-Dispersion in 1,4-Butandiol (B14), hergestellt durch Versetzen eines wässrigen Kieselsols (Levasil® 200E/20% von H.C. Starck GmbH & Co KG, Leverkusen, Deutschland, Teilchendurchmesser basierend auf der BET-Methode: 15 nm, pH 2,5, Siliciumdioxid-Konzentration: 20 Gew.-%) mit dem 1,4-Butandiol und Abdestillieren des Wassers (wie beschrieben in WO 2010/103072 A1).

Silica-MEG: 30% Silica-Dispersion in Monoethylenglycol (MEG), hergestellt durch Versetzen eines wässrigen Kieselsols (Levasil® 200E/20% von H.C. Starck GmbH & Co KG, Leverkusen, Deutschland, Teilchendurchmesser basierend auf der BET-Methode: 15 nm, pH 2,5, Siliciumdioxid-Konzentration: 20 Gew.-%) mit dem M EG und Abdestillieren des Wassers (wie beschrieben in WO 2010/103072 A1).

Silica-Polyol 6: 10% Silica-Dispersion in Polyol 6, hergestellt durch Versetzen eines wässrigen Kieselsols (Levasil® 200E/20% von H.C. Starck GmbH & Co KG, Leverkusen, Deutschland, Teilchendurchmesser basierend auf der BET-Methode: 15 nm, pH 2,5, Siliciumdioxid-Konzentration: 20 Gew.-%) mit Isopropanol und Polyol 6 und anschließendes Abdestillieren des Lösungsmittels (wie beschrieben in WO 2010/043530 A1).

Silica-Polyol 7: 10% Silica-Dispersion in Polyol 7, hergestellt durch Versetzen eines wässrigen Kieselsols (Levasil® 200E/20% von H.C. Starck GmbH & Co KG, Leverkusen, Deutschland, Teilchendurchmesser basierend auf der BET-Methode: 15 nm, pH 2,5, Siliciumdioxid-Konzentration: 20 Gew.-%) mit Isopropanol und Polyol 7, anschließendes Abdestillieren des Lösungsmittels, und Versetzen der Dispersion mit Isobutyltriethoxysilan (von Sigma-Aldrich Chemie GmbH, Steinheim, Deutschland) (wie beschrieben in WO 2010/043530 A1).

Levasil® 200E/20% ist eine 20% wäßrige kolloiddisperse Lösung von amorphem Siliciumdioxid (SiO₂) der Firma H.C. Starck GmbH & Co. KG.

Aerosil® R 8200 ist eine strukturmodifizierte mit Hexamethyldisilazan nachbehandelte hydrophobe pyrogene Kieselsäure der Firma Evonik Degussa GmbH.

Aerosil® 200 ist eine hydrophile pyrogene Kieselsäure der Firma Evonik Degussa GmbH.

Luran® VLN ist ein Styrol-Acrylnitril-Copolymer.

Die Teilchengrößenverteilungen wurden mit einem Malvern Mastersizer gemessen. Die einzelnen Werte bedeuten:
D10: 10% vom Gesamtvolumen der Partikel haben einen Durchmesser, der kleiner ist als der angegebene Wert
D50: 50% vom Gesamtvolumen der Partikel haben einen Durchmesser, der kleiner ist als der angegebene Wert
D90: 90% vom Gesamtvolumen der Partikel haben einen Durchmesser, der kleiner ist als der angegebene Wert
Mastersizer (Messung der Partikelgrößenverteilung): Mastersizer 2000 (Prinzip der statischen Lichtstreuung); Proben wurden mit Isopropanol auf die zur Messung erforderliche Konzentration verdünnt.

### Beispiel 1: Herstellung der Dispersion 1

402,3 g Polyol 1 und 37,5 g Silica-Polyol 1 wurden in einen gerührten Autoklaven vorgelegt und auf 110°C erwärmt. Anschließend wurden 175 g Acrylnitril, 350 g Styrol, 5,5 g Dodecanthiol, 2,6 g Vazo® 64 und 37,5 g des Silica-Polyols 1 gelöst in 429,4 g Polyol 1 innerhalb von 150 Minuten zur Reaktionsmischung zudosiert. Nach einer Abreaktionszeit von 15 Minuten wurde das Produkt durch Anlegen eines Vakuums bei 15 mbar vom Restmonomer befreit. Es wurde ein Polymer-Polyol erhalten, das eine Viskosität von 3707 mPas bei 25 °C, bestimmt nach ASTM D7042, aufwies. Das Ergebnis der Teilchengrößenverteilung: D10 = 0,792 µm, D50 = 1,005 µm und D90 = 1,250 µm.

### Beispiel 2: Herstellung der Dispersion 2

363,5 g Polyol 1 und 60 g Silica-Polyol 1 wurden in einen gerührten Autoklaven vorgelegt und auf 100°C erwärmt. Anschließend wurden 300 g Acrylnitril, 3,2 g Dodecanthiol, 3 g Vazo® 64 und 60 g des Silica-Polyols 1 gelöst in 389,4 g Polyol 1 innerhalb von 150 Minuten zur Reaktionsmischung zudosiert. Nach einer Abreaktionszeit von 30 Minuten wurde das Produkt durch Anlegen eines Vakuums bei 15 mbar vom Restmonomer befreit. Es wurde ein Polymer-Polyol erhalten, das eine Viskosität von 16509 mPas bei 25 °C, bestimmt nach ASTM D7042, aufwies. Das Ergebnis der Teilchengrößenverteilung: D10 = 0,783 µm, D50 = 2,675 µm und D90 = 7,340 µm.

### Beispiel 3: Herstellung der Dispersion 3

262,2 g 1,4-Butandiol und 50 g Silica-B14 wurden in einen gerührten Autoklaven vorgelegt und auf 100°C erwärmt. Anschließend wurden 116,7 g Acrylnitril, 233,3 g Styrol, 3,5 g Dodecanthiol, 3,5 g Vazo® 64 und 50 g des Silica-B14 gelöst in 280,9 g 1,4-Butandiol innerhalb von 150 Minuten zur Reaktionsmischung zudosiert. Nach einer Abreaktionszeit von 15 Minuten wurde das Produkt durch Anlegen eines Vakuums bei 50 mbar vom Restmonomer befreit. Es wurde ein Polymer-Polyol erhalten, das eine Viskosität von 111 mPas bei 25 °C, bestimmt nach ASTM D7042, aufwies. Das Ergebnis der Teilchengrößenverteilung: D10 = 1,463 µm, D50 = 4,228 µm und D90 = 8,547 µm.

### Beispiel 4: Herstellung der Dispersion 4

374,7 g MEG und 50 g Silica-MEG wurden in einen gerührten Autoklaven vorgelegt und auf 90°C erwärmt. Anschließend wurden 150 g Acrylnitril, 1,6 g Dodecanthiol, 1,5 g Vazo® 64 und 50 g des Silica-MEG gelöst in 399,7 g MEG innerhalb von 150 Minuten zur Reaktionsmischung zudosiert. Nach einer Abreaktionszeit von 60 Minuten wurde das Produkt durch Anlegen eines Vakuums bei 50 mbar vom Restmonomer befreit. Es wurde ein Polymer-Polyol erhalten, das eine Viskosität von 722 mPas bei 25 °C, bestimmt nach ASTM D7042, aufwies. Das Ergebnis der Teilchengrößenverteilung: D10 = 2,470, D50 = 7,437 µm und D90 = 11,801 µm.

### Beispiel 5: Herstellung der Dispersion 5

Eine Mischung von 103,8 g Polyol 6, 150 g Silica-Polyol 6, 20 g Acrylnitril, 40 g Styrol, 0,6 g Dodecanthiol und 0,6 g Vazo® 64 wurde in einen gerührten Autoklaven vorgelegt, auf 80°C erwärmt und für 4 Stunden gerührt. Anschließend wurde das Produkt durch Anlegen eines Vakuums bei 15 mbar und 120°C vom Restmonomer befreit. Es wurde ein Polymer-Polyol erhalten, das eine Viskosität von 1018 mPas bei 60°C, bestimmt nach ASTM D7042, aufwies. Das Ergebnis der Teilchengrößenverteilung: D10 = 0,875 µm, D50 = 2,673 µm und D90 = 4,950 µm.

### Beispiel 6: Herstellung der Dispersion 6

Eine Mischung von 223,8 g Polyol 7, 75 g Levasil® 200E/20%, 20 g Acrylnitril, 40 g Styrol, 0,6 g Dodecanthiol und 0,6 g Vazo® 64 wurde in einen gerührten Autoklaven vorgelegt, auf 80°C erwärmt und für 4 Stunden gerührt. Anschließend wurde das Produkt durch Anlegen eines Vakuums bei 15 mbar und 120°C vom Restmonomer befreit. Es wurde ein Polymer-Polyol erhalten, das eine Viskosität von 9095 mPas bei 25°C, bestimmt nach ASTM D7042, aufwies. Das Ergebnis der Teilchengrößenverteilung: D10 = 0,470 µm, D50 = 0,985 µm und D90 = 7,547 µm.

### Beispiel 7: Herstellung der Dispersion 7

8,7 g Polyol 7 und 300,0 g 10%iges Silica-Polyol 7 wurden in einen gerührten Autoklaven vorgelegt und auf 125°C erwärmt. Anschließend wurden 290,6g Styrol, 145,3 g Acrylnitril, 4,6 g Dodecanthiol und 2,0 g Vazo® 64 gelöst in 278,8 g Polyol 7 innerhalb von 150 Minuten zur Reaktionsmischung zudosiert. Nach einer Abreaktionszeit von 10 Minuten wurde das Produkt durch Anlegen eines Vakuums bei 10 mbar vom Restmonomer befreit. Es wurde ein Polymer-Polyol erhalten, das eine Viskosität von 8876 mPas bei 25 °C, bestimmt nach ASTM D7042, aufwies. Das Ergebnis der Teilchengrößenverteilung: D10 = 0,358, D50 = 0,746 µm und D90 = 4,568 µm.

### Beispiel 8: Herstellung der Dispersion 8

Eine Mischung von 223,8 g Polyol 8, 75 g Levasil® 200E/20%, 20 g Acrylnitril, 40 g Styrol, 0,6 g Dodecanthiol und 0,6 g Vazo® 64 wurde in einen gerührten Autoklaven vorgelegt, auf 80°C erwärmt und für 4 Stunden gerührt. Anschließend wurde das Produkt durch Anlegen eines Vakuums bei 15 mbar und 120°C vom Restmonomer befreit. Es wurde ein Polymer-Polyol erhalten, das eine Viskosität von 3707 mPas bei 25 °C, bestimmt nach ASTM D7042, aufwies. Das Ergebnis der Teilchengrößenverteilung: D10 = 0,792 µm, D50 = 1,005 µm und D90 = 1,250 µm.

### Beispiel 9: Herstellung der Dispersion 9

Eine Mischung von 408,5 g Polyol 5, 15 g Aerosil® R 8200, 75 g Acrylnitril, 0,75 g Dodecanthiol und 0,75 g Vazo® 64 wurde in einen gerührten Autoklaven vorgelegt, auf 80°C erwärmt und für 4 Stunden gerührt. Anschließend wurde das Produkt durch Anlegen eines Vakuums bei 15 mbar und 120°C vom Restmonomer befreit. Es wurde ein Polymer-Polyol erhalten, das eine Viskosität von 2058 mPas bei 25 °C, bestimmt nach ASTM D7042, aufwies.

### Beispiel 10: Herstellung der Dispersion 10

Eine Mischung von 383 g Polyol 5, 15 g Aerosil® 200, 33,3 g Acrylnitril, 66,7 g Styrol, 1 g Dodecanthiol und 1 g Vazo® 64 wurde in einen gerührten Autoklaven vorgelegt, auf 80°C erwärmt und für 4 Stunden gerührt. Anschließend wurde das Produkt durch Anlegen eines Vakuums bei 15 mbar und 120°C vom Restmonomer befreit. Es wurde ein Polymer-Polyol erhalten, das eine Viskosität von 1722 mPas bei 25 °C, bestimmt nach ASTM D7042, aufwies.

### Beispiel 11: Herstellung der Dispersion 11

319,2 g Polyol 2 und 166,7 g Silica-Polyol 2 wurden in einen gerührten Autoklaven vorgelegt und auf 110°C erwärmt. Anschließend wurden 66,7 g Acrylnitril, 133,3 g Styrol, 2,0 g Dodecanthiol, 2,0 g Vazo® 64 gelöst in 310,1 g Polyol 2 innerhalb von 150 Minuten zur Reaktionsmischung zudosiert. Nach einer Abreaktionszeit von 15 Minuten wurde das Produkt durch Anlegen eines Vakuums bei 7 mbar vom Restmonomer befreit. Es wurde ein Polymer-Polyol erhalten, das eine Viskosität von 1668 mPas bei 25 °C, bestimmt nach ASTM D7042, aufwies. Das Ergebnis der Teilchengrößenverteilung: D10 = 0,602 µm, D50 = 0,896 µm und D90 = 1,313 µm.

### Beispiel 12: Herstellung der Dispersion 12

280,5 g Polyol 2 und 250 g Silica-Polyol 2 wurden in einen gerührten Autoklaven vorgelegt und auf 110°C erwärmt. Anschließend wurden 200 g Acrylnitril, 400 g Styrol, 6,0 g Dodecanthiol, 6,0 g Vazo® 64 gelöst in 357,5 g Polyol 2 innerhalb von 150 Minuten zur Reaktionsmischung zudosiert. Nach einer Abreaktionszeit von 15 Minuten wurde das Produkt durch Anlegen eines Vakuums bei 16 mbar vom Restmonomer befreit. Es wurde ein Polymer-Polyol erhalten, das eine Viskosität von 6982 mPas bei 25 °C, bestimmt nach ASTM D7042, aufwies. Das Ergebnis der Teilchengrößenverteilung: D10 = 0,959 µm, D50 = 1,300 µm und D90 = 1,721 µm.

### Beispiel 13: Herstellung der Dispersion 13

609,4 g Polyol 2, 133,3 g Silica-Polyol 2 und 40 g Makromer 1 wurden in einen gerührten Autoklaven vorgelegt und auf 110°C erwärmt. Anschließend wurden 200 g Acrylnitril, 200 g Styrol, 4,0 g Dodecanthiol, 4,0 g Vazo® 64 und 20 g Makromer 1 gelöst in 789,3 g Polyol 2 innerhalb von 150 Minuten zur Reaktionsmischung zudosiert. Nach einer Abreaktionszeit von 15 Minuten wurde das Produkt durch Anlegen eines Vakuums bei 7 mbar vom Restmonomer befreit. Es wurde ein Polymer-Polyol erhalten, das eine Viskosität von 2370 mPas bei 25 °C, bestimmt nach ASTM D7042, aufwies. Das Ergebnis der Teilchengrößenverteilung: D10 = 0,254 µm, D50 = 0,332 µm und D90 = 0,88 µm.

### Beispiel 14: Herstellung der Dispersion 14

189,5 g Polyol 2, 666,7 g Silica-Polyol 2 und 20 g Makromer 1 wurden in einen gerührten Autoklaven vorgelegt und auf 110°C erwärmt. Anschließend wurden 100 g Acrylnitril, 100 g Styrol, 2,0 g Dodecanthiol, 2,0 g Vazo® 64 und 10 g Makromer 1 gelöst in 909,8 g Polyol 2 innerhalb von 150 Minuten zur Reaktionsmischung zudosiert. Nach einer Abreaktionszeit von 15 Minuten wurde das Produkt durch Anlegen eines Vakuums bei 7 mbar vom Restmonomer befreit. Es wurde ein Polymer-Polyol erhalten, das eine Viskosität von 1377 mPas bei 25 °C, bestimmt nach ASTM D7042, aufwies. Das Ergebnis der Teilchengrößenverteilung: D10 = 0,245 µm, D50 = 0,315 µm und D90 = 0,431 µm.

### Beispiel 15: Herstellung der Dispersion 15

310,5 g Polyol 2, 333,3 g Silica-Polyol 2 und 40 g Makromer 1 wurden in einen gerührten Autoklaven vorgelegt und auf 110°C erwärmt. Anschließend wurden 200 g Acrylnitril, 400 g Styrol, 6,0 g Dodecanthiol, 6,0 g Vazo® 64 und 20 g Makromer 1 gelöst in 684,2 g Polyol 2 innerhalb von 150 Minuten zur Reaktionsmischung zudosiert. Nach einer Abreaktionszeit von 15 Minuten wurde das Produkt durch Anlegen eines Vakuums bei 7 mbar vom Restmonomer befreit. Es wurde ein Polymer-Polyol erhalten, das eine Viskosität von 6118 mPas bei 25 °C, bestimmt nach ASTM D7042, aufwies. Das Ergebnis der Teilchengrößenverteilung: D10 = 0,397 µm, D50 = 0,547 µm und D90 = 0,955 µm.

### Beispiel 16: Herstellung der Dispersion 16

In einen Reaktor, der mit einem mehrfachen Flügelrührer ausgestattet ist, wurden 90 g des Polyol 2 sowie 15 g Silica-Polyol 2 und 45 g Luran® VLN vorgelegt. Der Reaktor wurde mit Stickstoff gespült und danach wurde das Gemisch auf 210 °C geheizt. Nach dem Erreichen der Temperatur wurde die Geschwindigkeit des Rührers auf 900 min⁻¹ gestellt und für 30 Minuten gerührt. Anschließend wurde das Produkt auf 35 °C heruntergekühlt und abgefüllt. Es wurde ein Polymer-Polyol erhalten, das eine Viskosität von 1980 mPas bei 25 °C, bestimmt nach ASTM D7042, aufwies. Das Ergebnis der Teilchengrößenverteilung: D10 = 0,650 µm, D50 = 2,538 µm und D90 = 7,760 µm.

### Beispiel 17: Herstellung der Dispersion 17

631,4 g Polyol 4 und 266,7 g Silica-Polyol 4 wurden in einen gerührten Autoklaven vorgelegt und auf 110°C erwärmt. Anschließend wurden 125,0 g Acrylnitril, 125,0 g Styrol, 2,4 g Dodecanthiol, 2,4 g Vazo® 64 und 1347,2 g Polyol 4 innerhalb von 150 Minuten zur Reaktionsmischung zudosiert. Nach einer Abreaktionszeit von 15 Minuten wurde das Produkt durch Anlegen eines Vakuums bei 8 mbar vom Restmonomer befreit. Es wurde ein Polymer-Polyol erhalten, das eine Viskosität von 2889 mPas bei 25 °C, bestimmt nach ASTM D7042, aufwies. Das Ergebnis der Teilchengrößenverteilung: D10 = 0,141 µm, D50 = 0,284 µm und D90 = 1,486 µm.

### Beispiel 18: Herstellung der Dispersion 18

696,4 g Polyol 3, 333,3 g Silica-Polyol 3, 179,5g Polyol 14 und 25,2 g Makromer 1 wurden in einen gerührten Autoklaven vorgelegt und auf 110°C erwärmt. Anschließend wurden 333,3 g Acrylnitril, 666,7 g Styrol, 10,5 g Dodecanthiol, 4,6 g Vazo® 64 und 23,2 g Makromer 1 gelöst in 456,77 g Polyol 3 innerhalb von 150 Minuten zur Reaktionsmischung zudosiert. Nach einer Abreaktionszeit von 15 Minuten wurde das Produkt durch Anlegen eines Vakuums bei 6 mbar vom Restmonomer befreit. Es wurde ein Polymer-Polyol erhalten, das eine Viskosität von 7408 mPas bei 25 °C, bestimmt nach ASTM D7042, aufwies. Das Ergebnis der Teilchengrößenverteilung: D10 = 0,440 µm, D50 = 1,299 µm und D90 = 5,453 µm.

### Beispiel 19: Vergleichsbeispiel zum Beispiel 3

262,2 g 1,4-Butandiol und 35 g Makromer 1 wurden in einen gerührten Autoklaven vorgelegt und auf 100°C erwärmt. Anschließend wurden 116,7 g Acrylnitril, 233,3 g Styrol, 3,5 g Dodecanthiol, und 3,5 g Vazo® 64 gelöst in 280,9 g 1,4-Butandiol innerhalb von 150 Minuten zur Reaktionsmischung zudosiert. Schon während der Reaktion kommt es zur Polyol/SAN Phasentrennung und Ablagerung des SAN Polymers an dem Rührer. Es konnte keine stabile Dispersion hergestellt werden.

### Beispiel 20: Vergleichsbeispiel zum Beispiel 3

262,2 g 1,4-Butandiol wurde in einen gerührten Autoklaven vorgelegt und auf 100°C erwärmt. Anschließend wurden 116,7 g Acrylnitril, 233,3 g Styrol, 3,5 g Dodecanthiol, und 3,5 g Vazo® 64 gelöst in 280,9 g 1,4-Butandiol innerhalb von 150 Minuten zur Reaktionsmischung zudosiert. Schon während der Reaktion kommt es zur Polyol/SAN Phasentrennung und Ablagerung des SAN Polymers an dem Rührer. Es konnte keine stabile Dispersion hergestellt werden.

### Beispiel 21: Vergleichsbeispiel zum Beispiel 4

374,7 g MEG und 35 g Makromer 1 wurden in einen gerührten Autoklaven vorgelegt und auf 90°C erwärmt. Anschließend wurden 150 g Acrylnitril, 1,6 g Dodecanthiol und 1,5 g Vazo® 64 gelöst in 399,7 g MEG innerhalb von 150 Minuten zur Reaktionsmischung zudosiert. Schon während der Reaktion kommt es zur Polyol/SAN Phasentrennung und Ablagerung des SAN Polymers an dem Rührer. Es konnte keine stabile Dispersion hergestellt werden.

PU1. Verwendung von erfindungsgemäßen Dispersionen zur Herstellung von Polyurethanschäumen

Die Herstellung von Proben für die mechanische Prüfung wurde mit in der Polyurethan-Industrie üblichen Verfahren durchgeführt. Das Isocyanat wurde zu dem gut durchmischten und homogenisiertem Blend von Dispersion und anderen Einsatzstoffen der Polyurethan-Formulierung zugegeben. Die Formulierungen wurden in eine offene Form gegossen, reagieren gelassen und bei Raumtemperatur ausgehärtet. Die mechanischen Eigenschaften wurden an Testkörpern, welche aus der Mitte des Schaumblocks geschnitten waren, entsprechend den Standard-Testmethoden bestimmt. Die Werte wurden dabei folgendermaßen bestimmt: Stauchhärte nach DIN EN ISO 3386, Druckverformungsrest nach DIN EN ISO 1856, Zugfestigkeit und Bruchdehnung nach DIN EN ISO 1798, Rückprallelastizität nach DIN EN ISO 8307, Weiterreißwiderstand nach DIN ISO 34-1, B(b).

### Beispiel A1:

Herstellung eines flexiblen Schaums enthaltend Polyol 10 (Referenzbeispiel)

Zu 349,1 g Polyol 9 und 116,4g Polyol 10 wurden 4,65 g eines silikonhaltigen Tensids (Tegostab® B4900), 0,84 g einer 33 gew.-%igen Lösung von 1,4-Diazabicyclo[2.2.2]octane in DPG (Dabco® 33LV), 0,28 g einer 70 gew.-%igen Lösung von Bis(N,N-dimethylaminoethyl)ether in DPG (Niax® A1) und 11.2 g Wasser zugegeben. Der erhaltene Blend wurde mit einem Laborrührer gemischt und dann 30 Minuten bei Raumtemperatur belassen. 0,84 g Zinn(II)octoat (Kosmos^{®} 29) wurde zugegeben, das Gemisch kurz verrührt, und 166,7 g Lupranat^{®} T 80 A (ein Gemisch aus 2,4-TDI und 2,6-TDI in einem Verhältnis von 80 / 20 mit einem NCO-Wert von 48,2%) wurde zugegeben. Nach 10 Sekunden langem Rühren mit einem Laborrührer bei 1500 rpm wurde das Gemisch in eine offene Form gegossen, reagieren gelassen und bei Raumtemperatur ausgehärtet, wobei ein 11 L Schaumblock erhalten wurde. Nach vollständiger Aushärtung bei Raumtemperatur über einen Zeitraum von 24 Stunden wurde der Schaum entformt, und die mechanischen Eigenschaften wurden bestimmt.

### Beispiel A2: Herstellung eines flexiblen Schaums enthaltend Dispersion 18

Zu 349,1 g Polyol 9 und 116,4g Dispersion 18 wurden 4,65 g eines silikonhaltigen Tensids (Tegostab® B4900), 0,84 g einer 33 gew.-%igen Lösung von 1,4-Diazabicyclo[2.2.2]octane in DPG (Dabco® 33LV), 0,28 g einer 70 gew.-%igen Lösung von Bis(N,N-dimethylaminoethyl)ether in DPG (Niax® A1) und 11.2 g Wasser zugegeben. Der erhaltene Blend wurde mit einem Laborrührer gemischt und dann 30 Minuten bei Raumtemperatur belassen. 0,84 g Zinn(II)octoat (Kosmos^{®} 29) wurde zugegeben, das Gemisch kurz verrührt, und 166,7 g Lupranat T® 80 A (ein Gemisch aus 2,4-TDI und 2,6-TDI in einem Verhältnis von 80 / 20 mit einem NCO-Wert von 48,2%) wurde zugegeben. Nach 10 Sekunden langem Rühren mit einem Laborrührer bei 1500 rpm wurde das Gemisch in eine offene Form gegossen, reagieren gelassen und bei Raumtemperatur ausgehärtet, wobei ein 11 L Schaumblock erhalten wurde. Nach vollständiger Aushärtung bei Raumtemperatur über einen Zeitraum von 24 Stunden wurde der Schaum entformt, und die mechanischen Eigenschaften wurden bestimmt.

Wie Tabelle 1 entnommen werden kann, werden durch Zugabe der Dispersion 18 die mechanischen Eigenschaften verbessert.

**Tabelle 1:**

| | Einheit | Beispiel A1 | Beispiel A2 |
|---|---|---|---|
| Startzeit | s | 12 | 13 |
| Abbindezeit | s | 92 | 112 |
| Abblaszeit | s | 126 | 150 |
| Dichte | kg/m³ | 38,7 | 40,2 |
| Stauchhärte bei 40% Stauchung | kPa | 6,4 | 6,0 |
| Druckverformungsrest 50% | % | 2,9 | 2,7 |
| Zugfestigkeit | kPa | 73 | 82 |
| Bruchdehnung | % | 75 | 89 |
| Rückprallelastizität | % | 40 | 41 |
| Weiterreißwiderstand | N/mm | 0,53 | 0,76 |

PU2. Verwendung von erfindungsgemäßen Dispersionen zur Herstellung von Polyurethanelastomeren

Die Herstellung von Proben für die mechanische Prüfung wurde mit in der Polyurethan-Industrie üblichen Verfahren durchgeführt. Die Werte wurden dabei folgendermaßen bestimmt: Dichte nach DIN EN ISO 1183-1A, Härte Shore A nach DIN 53505, Zugfestigkeit und Reißdehnung nach DIN 53504, Weiterreißwiderstand nach DIN ISO 34-1, B(b), Abrieb nach DIN ISO 4649.

### Beispiel B1: Herstellung von Polyurethanelastomeren (Referenzbeispiel)

Zu 175,4 g Polyol 4 und 7,05 g 1,4-Butandiol wurde ein Gemisch aus 0,78 g eines silikonhaltigen Tensids (Tegostab® B4113), 0,88 g einer 33 gew.-%igen Lösung von 1,4-Diazabicyclo[2.2.2]octane in DPG (Dabco® 33LV) und 11,7 g K-Ca-Na-Zeolith-Paste zugegeben. Das erhaltene Gemisch wurde in einem Hochgeschwindigkeits-mischer 1 Minute lang gemischt und dann 30 Minuten bei Raumtemperatur belassen. 54,1 g eines handelsüblichen MDI-Prepolymer für flexible Elastomere und Formweichschaumstoffe mit einer NCO-Gehalt von 23% (Lupranat® MP 102) wurde zugegeben (was einen Isocyanatindex von 105 ergibt) und nach 1 minütigem Rühren in einem Hochgeschwindigkeitsmischer in eine offene Form gegossen, reagieren gelassen und bei 50 °C zu einer Platte mit den Abmessungen 200x150x6 mm ausgehärtet. Das erhaltene Material wurde bei 60 °C 24 Stunden lang getempert, und die mechanischen Eigenschaften wurden an entsprechenden Probekörpern, welche aus dem mittleren Teil der Platte herausgeschnitten waren, bestimmt.

### Beispiel B2: Herstellung eines Polyurethanelastomers enthaltend Polyol 11 (Referenzbeispiel)

Zu 140 g Polyol 4, 40,2 g Polyol 11 und 6,5 g 1,4-Butandiol wurde ein Gemisch aus 0,72 g eines silikonhaltigen Tensids (Tegostab® B4113), 0,81 g einer 33 gew.-%igen Lösung von 1,4-Diazabicyclo[2.2.2]octane in DPG (Dabco® 33LV) und 10,9 g K-Ca-Na-Zeolith-Paste zugegeben. Das erhaltene Gemisch wurde in einem Hochgeschwindigkeitsmischer 1 Minute lang gemischt und dann 30 Minuten bei Raumtemperatur belassen. 50,8 g eines handelsüblichen MDI-Prepolymer für flexible Elastomere und Formweichschaumstoffe mit einer NCO-Gehalt von 23% (Lupranat® MP 102) wurde zugegeben (was einen Isocyanatindex von 105 ergibt) und nach 1 minütigem Rühren in einem Hochgeschwindigkeitsmischer in eine offene Form gegossen, reagieren gelassen und bei 50 °C zu einer Platte mit den Abmessungen 200x150x6 mm ausgehärtet. Das erhaltene Material wurde bei 60 °C 24 Stunden lang getempert, und die mechanischen Eigenschaften wurden an entsprechenden Probekörpern, welche aus dem mittleren Teil der Platte herausgeschnitten waren, bestimmt.

### Beispiel B3: Herstellung eines Polyurethanelastomers enthaltend Siliciumdioxid-Nanopartikel (Referenzbeispiel)

27,5 g Silica-Polyol 4 Dispersion, 149,2 g Polyol 4 und 6,9 g 1,4-Butandiol wurden gemischt und zu diesem Gemisch wurden 0,77 g eines silikonhaltigen Tensids (Tegostab® B4113), 0,87 g einer 33 gew.-%igen Lösung von 1,4-Diazabicyclo[2.2.2]octane in DPG (Dabco® 33LV) und 11,5 g K-Ca-Na-Zeolith-Paste gegeben. Das erhaltene Gemisch wurde in einem Hochgeschwindigkeitsmischer 1 Minute lang homogenisiert und dann 30 Minuten bei Raumtemperatur belassen. 53,2 g Lupranat® MP 102 wurde zugegeben (was einen Isocyanatindex von 105 ergibt) und nach 1 minütigem Rühren in einem Hochgeschwindigkeitsmischer wurde das Gemisch in eine offene Form gegossen, reagieren gelassen und bei 50 °C zu Platten mit den Abmessungen 200x150x6 mm ausgehärtet. Das erhaltene Material wurde bei 60 °C 24 Stunden lang getempert, und die mechanischen Eigenschaften an entsprechenden Probekörpern, welche aus dem Mittelteil der Platte herausgeschnitten waren, bestimmt.

### Beispiel B4: Herstellung eines Polyurethanelastomers enthaltend Dispersion 17

Zu 181,8 g Dispersion 17 und 6,5 g 1,4-Butandiol wurde ein Gemisch aus 0,72 g eines silikonhaltigen Tensids (Tegostab® B4113), 0,81 g einer 33 gew.-%igen Lösung von 1,4-Diazabicyclo[2.2.2]octane in DPG (Dabco® 33LV) und 10,8 g K-Ca-Na-Zeolith-Paste zugegeben. Das erhaltene Gemisch wurde in einem Hochgeschwindigkeitsmischer 1 Minute lang gemischt und dann 30 Minuten bei Raumtemperatur belassen. 49,5 g eines handelsüblichen MDI-Prepolymer für flexible Elastomere und Formweichschaumstoffe mit einer NCO-Gehalt von 23% (Lupranat® MP 102) wurde zugegeben und nach 1 minütigem Rühren in einem Hochgeschwindigkeitsmischer in eine offene Form gegossen, reagieren gelassen und bei 50 °C zu einer Platte mit den Abmessungen 200x150x6 mm ausgehärtet. Das erhaltene Material wurde bei 60 °C 24 Stunden lang temperiert, und die mechanischen Eigenschaften wurden an entsprechenden Probekörpern, welche aus dem mittleren Teil der Platte herausgeschnitten waren, bestimmt.

Die Resultate in Tabelle 2 zeigen, dass im Vergleich mit dem Referenzbeispiel B1 die Zugabe von Standard-Graftpolyol (B2) als auch von Silica-Nanopartikeln (B3) verbesserte mechanische Werte ergeben. Die besten mechanischen Werte werden bekommen, wenn Hybrid-Dispersionen (B4) eingesetzt werden, dieses bei etwa derselben Zugabe an organischen and anorganischen Zusatzstoffen wie in Beispiel B2 und B3.

**Tabelle 2:**

| | Beispiel | Beispiel | Beispiel | Beispiel |
|---|---|---|---|---|
| | B1 | B2 | B3 | B4 |
| offene Zeit [min] | 4,5 | 3,5 | 5 | 3,5 |
| Dichte [g/cm³] | 1,092 | 1,090 | 1,098 | 1,097 |
| Härte Shore A | 61 | 64 | 61 | 64 |
| Zugfestigkeit [MPa] | 4 | 7 | 4 | 10 |
| Reißdehnung [%] | 220 | 290 | 230 | 360 |
| Weiterreißwiderstand [kN/m] | 6 | 8 | 7 | 8 |
| Abrieb [mm³] | 473 | 303 | 336 | 261 |

PU3. Verwendung von erfindungsgemäßen Dispersionen zur Herstellung geschäumter Elastomere

Die Herstellung von Proben für die mechanische Prüfung wurde mit in der Polyurethan-Industrie üblichen Verfahren durchgeführt. Die Werte wurden dabei folgendermaßen bestimmt: Zugfestigkeit und Bruchdehnung nach DIN 53504, Weiterreißwiderstand nach DIN ISO 34-1, B(b), Rückprallelastizität nach DIN 53512.

Ausgangsmaterial:
Isocyanat 2: Prepolymer aus 50 Gew. -Teilen 4,4'-Diisocyanatodiphenylmethan (Rein-MDI), 2 Gew.-Teilen uretoniminmodifiziertes Rein-MDI, 46 Gew.-Teilen eines linearen Propylenglycolgestarteten Polyoxypropylenetherols (OHZ 55 mg KOH/mg) und 2 Gew.-Teilen Tripropylenglycol.

### Beispiel C1: Herstellung eines geschäumten Elastomers enthaltend Dispersion 3

54,7 Gew.-Teile Polyol 12, 30 Gew.-Teile Polyol 13, 15 Gew.-Teile Dispersion 3, 2,6 Gew.-Teile Monoethyleneglycol, 0,3 Gew.-Teilen silikonbasierter Schaumstabilisator (Dabco^{®} DC 193), 0,9 Gew.-Teile 1,4-Diazabicyclo[2.2.2]octan, 0,3 Gew.-Teile Bis(2-dimethylaminopropyl)methylamin (Polycat^{®} 77), 0,04 Gew.-Teiln Organo-Zinn-Katalysator (Fomrez^{®} UL 28) und 0,62 Gew.-Teile Wasser wurden zu einer Polyolkomponente vermischt. 100 Gew.-Teile der Polyolkomponente mit einer Temperatur von 45°C und 98 Gew.-Teile Isocyanat 2 mit einer Temperatur von 25°C wurden miteinander mittels Vollrathrührer vermischt. Diese Mischung wurde in eine auf 45°C temperierte Aluminiumform (200x200x10 mm) gegeben, die Form geschlossen und der so hergestellte Polyurethanschaum nach 5 Minuten entformt. Die mechanischen Eigenschaften der hergestellten Probe wurden nach 24 Stunden Lagerung bestimmt und sind in Tabelle 3 aufgelistet.

**Tabelle 3**

| Beispiel C1 | |
|---|---|
| Dichte [g/L] | 473 |
| Härte [Shore A] | 40 |
| Zugfestigkeit [MPa] | 2,5 |
| Bruchdehnung [%] | 266 |
| Weiterreißwiderstand [N/mm] | 4,0 |
| Rückprallelastizität [%] | 35 |

PU4. Verwendung von erfindungsgemäßen Dispersionen zur Herstellung thermoplastischen Polyurethane

Die Herstellung von Proben für die mechanische Prüfung wurde mit in der Polyurethan-Industrie üblichen Verfahren durchgeführt. Die Werte wurden dabei folgendermaßen bestimmt: Härte Shore D nach DIN 53505, Zugfestigkeit und Reißdehnung nach DIN 53504, Weiterreißwiderstand nach DIN ISO 34-1, B(b), Abrieb nach DIN ISO 4649.

### Beispiel D1: Herstellung eines thermoplastischen Polyurethanes enthaltend Dispersion 2

In einem Reaktionsgefäß wurden 245 g Polyol 1, 245 g Dispersion 2, 96 g 1,4-Butandiol eingewogen und auf 90°C aufgeheizt. Anschließend wurde unter Rühren 0,07 g Zinn(II)octoate (Kosmos^{®} 29) zugegeben und bei 80°C 343,3 g 4,4'-MDI (Methylendiphenyldiisocyanat, Luptanat® ME) zugegeben und so lange gerührt, bis die Lösung homogen war. Anschließend wurde die Reaktionsmasse in eine flache Schale gegossen und bei 125°C auf einer Heizplatte 10 min getempert. Danach wurde die entstandene Schwarte in einem Heizschrank 15 h bei 80°C getempert. Nach dem Granulieren der Gießplatten wurden diese auf einer Spritzgussmaschine zu 2 mm Spritzplatten verarbeitet. Das Produkt hatte eine Härte von 57 Shore D, eine Zugfestigkeit von 26 M Pa, eine Reißdehnung von 420%, einen Weiterreißwiederstand von 77 KN/m und einen Abrieb von 71 mm³.

**Tabelle 4: Verwendete Einsatzstoffe in oben genannten Beispielen**

| Handelsname | Hersteller |
|---|---|
| 1,4-Butandiol | BASF |
| Lupranat® M P 102 | BASF |
| Lupranat® T 80 A | BASF |
| Luptanat® ME | BASF |
| Tegostab® B 4900 | Evonik |
| Tegostab® B 4113 | Evonik |
| K-Ca-Na Zeolith-Paste | UOP |
| Dabco^{®} 33 LV | Air products |
| Dabco^{®} DC 193 | Air products |
| Polycat^{®} 77 | Air products |
| Niax^{®} A1 | Momentive |
| Fomrez^{®} UL 28 | Momentive |
| Kosmos^{®} 29 | Evonik |

## Patentansprüche

1. Dispersion, umfassend eine kontinuierliche Phase (C) und eine bei 20 °C feste Phase, die in der kontinuierlichen Phase dispergiert ist, wobei die kontinuierliche Phase (C) wenigstens eine Verbindung mit wenigstens zwei Zerewitinoff-aktiven Wasserstoffatomen enthält, und die feste Phase wenigstens einen Füllstoff enthält, wobei der Füllstoff ein Hybridmaterial ist, das jeweils mindestens ein organisches Polymer (P) und mindestens ein anorganisches Partikel umfasst.

2. Dispersion gemäß Anspruch 1, wobei das mindestens eine anorganische Partikel einen durchschnittlichen maximalen Durchmesser der Primärpartikel von höchstens 5 µm aufweist, wobei zumindest eine, bevorzugt alle, der Dimensionen des anorganischen Partikels im Bereich von 1-100 nm liegt.

3. Dispersion gemäß Anspruch 1 oder 2, wobei die Verbindung mit wenigstens zwei Zerewitinoff-aktiven Wasserstoffatomen ausgewählt ist aus der Gruppe enthaltend Polyetherpolyole, Kettenverlängerer, Polyesterpolyole, Polyether-Polyester-Polyole, Polycarbonat-Polyole, Polyetheramine und Mischungen davon.

4. Dispersion gemäß einem der Ansprüche 1 bis 3, wobei die Verbindung mit wenigstens zwei Zerewitinoff-aktiven Wasserstoffatomen ein Polyetherpolyol ist.

5. Dispersion gemäß einem der Ansprüche 1 bis 4, wobei die Verbindung mit wenigstens zwei Zerewitinoff-aktiven Wasserstoffatomen ein Polyetherpolyol mit einem Molekulargewicht (Mn) von 200 - 12000 g/mol und/ oder einer OH-Zahl von 10 - 1000 mg KOH/g und/ oder einer Funktionalität des Polyolstarters von 2 - 8 ist.

6. Dispersion gemäß einem der Ansprüche 1 bis 5, wobei das organische Polymer (P) ausgewählt ist aus der Gruppe umfassend Polystyrol, Poly-(Styrol-co-Acrylnitril), Polyacrylnitril, Polyacrylat, Polymethacrylat, Polyolefine, Polyester, Polyamid, Polyvinylchlorid, Polyethylenterephthalat, Polyisobutylen, Polyethylenglycol, Polyvinylacetat oder Mischungen davon.

7. Dispersion gemäß einem der Ansprüche 1 bis 6, wobei das anorganische Partikel ausgewählt ist aus der Gruppe der Silikat-Materialien, Metalloxide, Metallcarbonate, anorganische Salze, anorganische Pigmente, Kohlenstoff und Mischungen daraus.

8. Dispersion gemäß einem der Ansprüche 1 bis 7, wobei das anorganische Partikel ein Silikat ist, bevorzugt Silica-Sol.

9. Verfahren zur Herstellung einer Dispersion gemäß einem der Ansprüche 1 bis 8, umfassend die Schritte:
a) Erwärmen einer Mischung (I) enthaltend wenigstens ein schmelzbares Polymer (P), wenigstens eine kontinuierliche Phase (C) und wenigstens ein anorganisches Partikel und optional weitere Komponenten,
b) Durchmischen, so dass wenigstens ein schmelzbares Polymer in geschmolzenem Zustand in der Mischung (I) vorzugsweise in Form von fein verteilten Tropfen vorliegt,
c) Abkühlen der Mischung (I).

10. Verfahren zur Herstellung einer Dispersion gemäß einem der Ansprüche 1 bis 8, wobei mindestens ein ethylenisch ungesättigtes Monomer (A) in Gegenwart mindestens eines anorganisches Partikels unter Zusatz eines Reaktionsmoderators, eines Radikalinitiators, und optional weiterer Komponenten, in einer kontinuierlichen Phase (C) radikalisch polymerisiert wird.

11. Verfahren zur Herstellung einer Dispersion gemäß Anspruch 10, wobei die ethylenisch ungesättigten Monomere (A) ausgewählt sind aus der Gruppe enthaltend Styrol, alpha-Methylstyrol, Acrylnitril, Acrylamid, (Meth)acrylsäure, (Meth)acrylsäureester, Hydroxyalkyl(meth)acrylate, Vinylether, Allylether, Divinylbenzol, oder Mischungen davon.

12. Verfahren zur Herstellung einer Dispersion gemäß einem der Ansprüche 9 bis 11, wobei die kontinuierliche Phase (C) wenigstens eine Verbindung mit wenigstens zwei Zerewitinoff-aktiven Wasserstoffatomen enthält, und die Verbindung ausgewählt ist aus der im Anspruch 3 angegebenen Gruppe.

13. Verfahren zur Herstellung einer Dispersion gemäß Anspruch 12, wobei die Verbindung mit wenigstens zwei Zerewitinoff-aktiven Wasserstoffatomen ein Polyetherpolyol ist.

14. Verfahren zur Herstellung einer Dispersion gemäß einem der Ansprüche 10 bis 13, wobei der Reaktionsmoderator ausgewählt ist aus der Gruppe bestehend aus monofunktionellen Alkoholen, Alkylmercaptanen und Mischungen davon, und/ oder der Radikalinitiator ausgewählt ist aus der Gruppe bestehend aus Peroxid- oder Azo-Verbindungen und Mischungen davon.

15. Verwendung einer Dispersion gemäß einem der Ansprüche 1 bis 8 zur Herstellung von Polyurethanen, oder als Lackrohstoff für die Automobilindustrie, als Dispersionsrohstoff für Bautenanstriche, Dichtmasse, Zement, Papier, Textil, Klebrohstoff, als Treibstoffadditiv oder Dach-Beschichtung, zum Polieren von Oberflächen oder zum Einsatz in EpoxySystemen.

16. Verfahren zur Herstellung von Polyurethanen, bevorzugt von kompakten oder geschäumten Polyurethanen, wobei mindestens eine Dispersion gemäß einem der Ansprüche 1 bis 8 mit mindestens einem Polyisocyanat umgesetzt wird.
